(19) Europäisches Patentamt
European Patent Office
Office européen des brevets

(11) Veröffentlichungsnummer: **0 373 255 A1**

# (12) EUROPÄISCHE PATENTANMELDUNG

(21) Anmeldenummer: **88121153.6**

(22) Anmeldetag: **16.12.88**

(51) Int. Cl.[5]: **C23F 11/02, B65D 81/26, B29C 47/00, B05D 7/02**

(43) Veröffentlichungstag der Anmeldung: **20.06.90 Patentblatt 90/25**

(84) Benannte Vertragsstaaten: **CH DE FR IT LI NL SE**

(71) Anmelder: **INSTITUT MEKHANIKI METALLOPOLIMERNYKH SISTEM AKADEMII NAUK BELORUSSKOI SSR**
**Ulitsa Kirova, 32a**
**Gomel(SU)**

(72) Erfinder: **Pinchuk, Leonid Semenovich**
**ulitsa Petchenko, 14, kv. 17**
**Gomel(SU)**
Erfinder: **Goldade, Viktor Antonovich**
**ulitsa Kozhara, 5, kv. 30**
**Gomel(SU)**
Erfinder: **Vertyachikh, Igor Mikhailovich**
**ulitsa P.Brovki, 25, kv. 84**
**Gomel(SU)**
Erfinder: **Liberman, Semen Yankelievich**
**ulitsa B.Khmelnitskogo, 108**
**Gomel(SU)**
Erfinder: **Rechits, Grigory Vladimirovich**
**ulitsa Fedjuninskogo, 6, kv. 88**
**Gomel(SU)**
Erfinder: **Finkelshtein, Benyamin Abramovich**
**ulitsa Olgi Forsh, 15 korpus 1, kv. 214**
**Leningrad(SU)**
Erfinder: **Shmurak, Vladimir Isaakovich**
**ulitsa Liflyandskaya, 10, kv. 54**
**Leningrad(SU)**
Erfinder: **Voronezhtsev, Jury Ivanovich**
**ulitsa Klermon-Ferran, 6, kv. 33**
**Gomel(SU)**
Erfinder: **Snezhkov, Vladimir Vladimirovich**
**ulitsa Pushkina, 16, kv. 5**
**Gomel(SU)**
Erfinder: **Goncharov, Grigory Anatolievich**
**derevnya Eremino ulitsa Novaya, 15**
**Gomelskaya oblast(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

## (54) Polymere Korrosionsschutzfolie, Verfahren zu ihrer Herstellung und Vorrichtung zur Durchführung des Verfahrens.

(57) Die erfindungsgemäße polymere Korrosionsschutzfolie enthält eine thermoplastische Grundlage, ausgeführt mit allmählichem Übergang von einer porenfreien zur porigen Struktur, gebildet durch ein System von geschlossenen und kommunizierenden Poren, die mit einer inhibitorhaltigen Flüssigkeit gefüllt sind, unter Erhöhung der scheinbaren Dichte bis zu einer der Thermoplastdichte gleichen Größe auf 1/4 bis 2/3 Foliendicke in Richtung von einer der Folienflächen weg.

Das Verfahren zur Herstellung der angegebenen Folie schließt Extrudieren der Thermoplastschmelze und das anschließende Aufblasen derselben zu Schläuchen ein. Man füllt den Schlauch mit der inhibitorhaltigen Flüssigkeit und bringt die sich bewegende Schlauchfolie mit dieser Flüssigkeit in Berührung unter Konstanthalten des Flüssigkeitsstandes unterhalb der Kristallisatonslinie, wobei die Differenz zwischen den Parametern der Löslichkeit der inhibitorhaltigen Flüssigkeit und des Thermoplastes unter 6 liegt.

Die Vorrichtung zur Durchführung des angegebenen Verfahrens umfasst ein System für die Zufuhr der inhibitorhaltigen Flüssigkeit, das einen in vertikaler Richtung hin-und herbeweglich angeordneten Behälter enthält, und einen Spritzkopf, der über einen Kanal für die Zufuhr der inhibitorhaltigen Flüssigkeit in den entstehenden Schlauch verfügt. Der erwähnte Behälter ist auf gleicher Höhe mit der Austrittsöffnung des besagten Kanals angebracht, der mit dem Behälter durch eine Rohrleitung verbunden ist und mit diesem kommunizierende Gefäße bildet.

EP 0 373 255 A1

Die vorliegende Erfindung wird bei gleichzeitiger Konservierung und Verpackung von Metallgegenständen im Maschinen-, Werkzeugmaschinen-Gerätebau, Werkzeugbau und anderen Industriezweigen Verwendung finden.

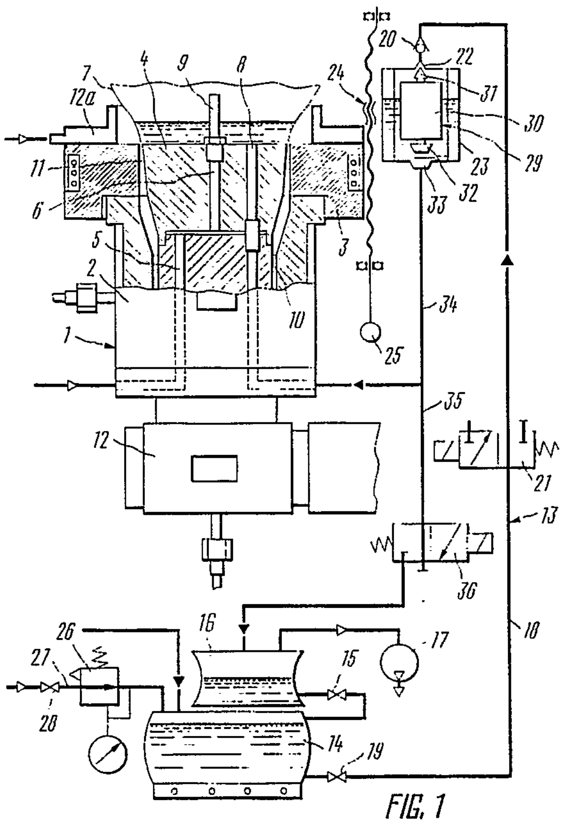

FIG. 1

# POLYMERE KORROSIONSSCHUTZFOLIE, VERFAHREN ZU IHRER HERSTELLUNG UND VORRICHTUNG ZUR DURCHFÜHRUNG DES VERFAHRENS

Die vorliegende Erfindung bezieht sich auf die Herstellung von Korrosionsschutzmitteln durch Verwendung chemisch beständiger Werkstoffe, die Metallgegenstände vor atmosphärischer Einwirkung und aggresiven Medien isolieren, und betrifft insbesondere eine polymere Korrosionsschutzfolie, die Verfahren zu ihrer Herstellung und Vorrichtungen zur Durchführung des Verfahrens

Unter den am meisten verbreiteten Korrosionsschutzmitteln für Metalle muß man die Isolation von zu schützenden Erzeugnissen mit Überzügen und Schmierstoffen, welche auf die Korrosion von Metallen wirkende Kontaktinhibitoren enthalten, sowie die hermetische Verpackung von Metallgegenständen in polymere Beutel erwähnen, wobei innerhalb dieser Beutel eine den Verlauf von Korrosionsprozessen hemmende bzw. ausschließende Schutzatmosphäre erzeugt wird. Das zuletzt angeführte Mittel erweist sich in vielen Fällen als besonders geeignet, weil es nicht nur Einzelteile der einfachsten Form sondern auch aus diesen montierte Baugruppen und Anlagen insgesamt gegen Korrosion zu schützen ermöglicht. Die Korrosionsschutzwirkung wird dann erreicht, wenn man den Verpackungshohlraum mit flüchtigen Korrosionsinhibitoren sättigt, wobei als deren Quelle das Verpackungsmaterial selbst, d.h. die inhibitorhaltige polymere Folie dient.

Bekannt ist eine aus zwei Schichten bestehende polymere Korrosionsschutzfolie, bei der eine der Schichten porös ist, wobei ihre Poren mit einem flüchtigen Inhibitor gegen atmosphärische Korrosion, z.B. mit Ammoniumdicyclohexylnitrit oder Monoethanolaminbenzoat gefüllt sind.

Das Verfahren zur Herstellung dieser Folie besteht darin, daß man das Gemisch aus Thermoplast und einem Korrosionsinhibitor und die Thermoplastschmelze getrennt von einander extrudiert und anschließend zwei polymere Schichten verschiedener Dicke und Struktur durch Adhäsion vereinigt.

Die so erhaltene Folie weist an der Verbindungsstelle dieser Schichten eine starke Übergangsgrenze zwischen poröser und porenloser Struktur auf. Die poröse Schicht hat die gleiche Porösität und Dichte in der ganzen Dicke. Zur Durchführung dieses Verfahrens wird in der Regel ein Spritzkopf mit zwei Schlitzen verwendet, was einen zusätzlichen Energieaufwand erfordert.

Die Folie besitzt ausreichend hohe Korrosionsschutzeigenschaften, weist aber einen beschränkten Anwendungsbereich unter verschiedenen Betriebsbedingungen auf. Dies ist erstens dadurch bedingt, daß bei ihrer Herstellung wegen hoher Extrusionstemperaturen nur wärmebeständige Inhibitoren in Frage kommen, deren Sortiment beschränkt ist. Die Foliendicke kann zweitens nicht unter 40 µm liegen, falls der Korrosionsinhibitorgehalt der Poren der thermoplastischen Grundlage ausreicht.

Um eine mehrschichtige Folie mit guten Betriebseigenschaften herzustellen, ist es erforderlich, die porenlose und die porige Schicht vorteilhaft aus dem gleichen Thermoplast unter ähnlichen technologischen Bedingungen seiner Verarbeitung herzustellen. Es kann sonst zur Trennung der mehrschichtigen Folie wegen unterschiedlicher Natur der anwendbaren Thermoplaste, verschiedenen Ausziehens unter Orientierung und Schwinden polymerer Schichten beim Verpacken von Erzeugnissen mittels dieser Folie, beispielsweise durch Thermovakuumformung, kommen. Die Trennung führt dazu, daß die Betriebsdaten der Folie herabgesetzt werden und die Warenform der Verpackungen verschlechtert wird.

Bekannt ist eine polymere Korrosionsschutzfolie, bei der die eine Oberfläche mit einem fein verteilten pulverförmigen Korrosionsinhibitor beschichtet ist. Das Verfahren zur Herstellung solcher Folien besteht darin, daß die Schmelze des Thermoplastes extrudiert und danach durch Druckluft, gesättigt mit dem fein verteilten pulverförmigen Korrosionsinhibitor, zu Schläuchen geblasen wird (SU, A, 859178).

Zur Durchführung dieses Verfahrens wird ein Spritzkopf eingesetzt, der Gehäuse, Hohldorn und Einsatz mit einem Kanal für die Druckluftzufuhr vorsieht, wobei der Einsatz innerhalb des Hohldorns fluchtend liegt und über seine Stirnfläche hinausragt. Der hinausragende Teil des Einsatzes ist blind mit radialen Öffnungen ausgeführt, die für die Zufuhr der mit dem fein verteilten pulverförmigen Korrosionsinhibitor gesättigten Druckluft dienen.

Die so hergestellte Folie weist keine ausreichend hohen Kennziffern der Korrosionsschutzeigenschaften auf, weil das aufgetragene Pulver nachfällt und die Inhibition sich als ungleichmäßig erweist. Die Sättigung der Folie mit dem pulverförmigen Inhibitor bereitet außerdem Schwierigkeiten, weil er praktisch nicht ins Folienvolumen diffundiert und nur auf der Oberfläche ausfällt.

Bekannt ist eine polymere Korrosionsschutzfolie auf der Grundlage eines Thermoplastes, bei dem der Korrosionsinhibitor im ganzen Volumen gleichmäßig verteilt ist. Die Folie wird durch Extrudieren eines Gemisches von Thermoplast mit dem Korrosionsinhibitor und anschließendes Aufblasen der Schmelze zu Folienschläuchen unter Abkühlung hergestellt. Dieses Verfahren wird in einem Spritzkopf durchgeführt (SU-A - 722779), der ein hohles Gehäuse mit einem Mundstück und einen darin vorgesehenen und das

Mundstück durchgehenden Dorn enthält, in dessen Körper wenigstens ein Kanal für die Druckluftzufuhr und wenigstens ein Kanal für die Zufuhr der Schmierflüssigkeit vorhanden sind. Gehäuse und Mundstückwände bilden mit den Dornwänden einen Formkanal, der in einen ringförmigen Formschlitz übergeht, in dessen Bereich der Dornkörper eine seitens des Formschlitzes freiliegende Ringnut aufweist. In der Ringnut sitzt eine Büchse, die aus einem für den Inhibitor durchlässigen Material besteht, wobei die Innenwand der Büchse und die Ringnutwände eine Kammer, verbunden mit dem Kanal für die Zufuhr der Schmierflüssigkeit, bilden. Wenn die Schmelze des Gemisches von Thermo plast mit dem Inhibitor durch den Kanal strömt, wird aus der genannten Kammer in den Formschlitz die Schmierflüssigkeit unter Druck zugeführt, wodurch eine gleichmäßige Schicht in Längsrichtung dieses Schlitzes erzeugt wird. Die Verwendung des Schmiermittels bewirkt die Verminderung der Reibung der Thermoplastschmelze im Falle ihrer Reibung an den Schlitzwänden und ermöglicht, hochgefüllte Thermoplaste zu verarbeiten. Die Korrosionsschutzeigenschaften der Folie beeinflusst die Schmierflüssigkeit nicht.

Solch eine Folie besitzt nicht die erforderlichen Korrosionsschutzeigenschaften, weil der Inhibitor eingekapselt im Thermoplast vorliegt und seine Ausscheidung in das hermetisierbare Volumen mit Schwierigkeiten verbunden ist.

Bekannt ist eine polymere Korrosionsschutzfolie auf Grundlage eines weichgemachten korrosionsinhibitorhaltigen Polymers ( IT-A -1182102). Die Folienstruktur in der Dicke stellt eine polymere Matrix mit einem System von Poren dar, die mit dem Weichmacher oder seiner Lösung mit dem Korrosionsinhibitor (mit der inhibitorhaltigen Flüssigkeit) gefüllt sind. Die Poren sind im ganzen Volumen des Thermoplastes gleichmäßig verteilt; seine Dichte in der Folienlänge bleibt dabei unverändert. Das Verfahren besteht im Extrudieren der Schmelze des Gemisches von Thermoplast mit dem Weichmacher, beispielsweise Mineralöl, durch den Formkanal des ringförmigen Spritzkopfes und anschließendem Aufblasen der Schmelze durch Luft zu einem Schlauch unter kontinuierlicher Zerstäubung des Korrosionsinhibitors in Form einer Flüssigkeit im Hohlraum des entstehenden Schlauchs im elektrischen Feld.

Zu diesem Zweck verwendet man eine Vorrichtung, die ein System für die Zufuhr des Korrosionsinhibitors, ein Mittel zur Erzeugung des elektrischen Feldes innerhalb des Schlauches und einen Spritzkopf vorsieht, der ein hohles Gehäuse mit einem Mundstück und einen darin vorgesehenen und das Mundstück durchgehenden Dorn enthält, in dessen Körper wenigstens ein Kanal für die Druckluftzufuhr und wenigstens ein Kanal für die Zufuhr des Inhibitors in den entstehenden Schlauch ausgeführt sind, wobei Gehäuse- und Mundstückwände mit den Dornwänden einen Formkanal bilden, der in einen ringförmigen Schlitz übergeht. Die Zugabe des Korrosionsinhibitors in das weichgemachte Polymer wird wie folgt durchgeführt.

Der Spritzkopf des Extruders verlässt das Material in zähflüssigem Zustand (Temperatur von etwa 140° C), Dämpfe oder kleine Tropfen des Inhibitors werden deshalb von einem Weichmacher, insbesondere Mineralöl, als Sorptionsmittel für Inhibitoren effektiv aufgenommen und lösen sich darin auf. Nach der Abkühlung der Folie und Bildung der porigen Matrix im Material scheidet sich der Inhibitor auf die Oberfläche zusammen mit dem Weichmacher aus. Die Herstellungstechnologie dieser Folie ist einfach, aber die Folie zeichnet sich durch ungenügend hohe Korrosionsschutzeigenschaften aus folgenden Gründen aus.

Erstens begünstigt die porige Struktur der Folie im ganzen Volumen die Diffusion bzw. die Ausscheidung des Inhibitors nicht nur auf der Innenfläche der Folie und weiter in das hermetisierbare Verpackungsvolumen, sondern auch auf ihrer Außenfläche. Hiedurch wird die Schutzwirkungsdauer der Folie verkürzt und der unzweckmäßige Inhibitor verbrauch erhöht. Die Überführung von Inhibitoren in den gasförmigen Zustand bei erhöhten Temperaturen, um die Innenfläche der Schlauchfolie mit Inhibitordämpfen zu sättigen, setzt zweitens in vielen Fällen die Wirksamkeit der Inhibitoren wegen thermischer Zersetzung herab; die elektrostatische Zerstäubung von Flüssigphaseninhibitoren ohne ihre Erwärmung ist mit gewissen technologischen Schwierigkeiten und zusätzlichem Energieaufwand verbunden. Die Schutzdauer dieser Folien ist außerdem gering, weil es unmöglich ist, den Inhibitor in einer 3 bis 4 Masse-% übersteigenden Menge zuzugeben.

Der vorliegenden Erfindung liegt die Aufgabe zugrunde, eine einschichtige polymere Korrosionsschutzfolie mit solch einer Struktur und solch einer Verteilung des Korrosionsinhibitors in der thermoplastischen Grundlage bereitzustellen, die gute Korrosionsschutzeigenschaften beim Austreten des Inhibitors nur in der Richtung der zu schützenden Metallgegenständen besitzt, sowie Verfahren zur Herstellung der angegebenen Folie durch die Wahl der entsprechenden Bedingungen für die Berührung des Korrosionsinhibitors mit der Thermoplastschmelze und Vorrichtungen zur Durchführung dieser Verfhren unter solcher Ausgestaltung von Baugruppen des Inhibitorzufuhrsystems zu entwickeln, die bei einfacher Technologie, geringem Material- und Energieaufwand der erwähnten Folie die erforderlichen Eigenschaften gewährleisten.

Die Aufgabe wird dadurch gelöst, daß eine polymere eine thermoplastische Grundlage von inhomogener Struktur und eine eine inhibitorhaltige Flüssigkeit enthaltende Korrosionsschutzfolie vorgeschlagen wird,

bei der erfindungs gemäß die thermoplastische Grundlage mit allmählichem Übergang von der porenfreien zur porigen Struktur, gebildet durch ein System von geschlossenen und kommunizierenden Poren, die mit einer inhibitorhaltigen Flüssigkeit gefüllt sind, wobei als solche ein Korrosionsinhibitor in Form einer flüssigen Phase oder seine Lösung in Weichmacher dient, mit Erhöhung der scheinbaren Dichte bis eine der Thermoplastdichte gleiche Größe auf 1/4 bis 2/3 Foliendicke in Richtung von einer der Folienflächen erreicht ist.

Die erfindungsgemäße Folie zeichnet sich durch hohe Korrosionsschutz- und physikalisch-mechanische Eigenschaften aus, die sich nach der Folienstruktur und Verteilung des Korrosionsinhibitors in der Folie richten. Die Folie ist einschichtig aus dem einen Thermoplast ausgeführt, der eine unterschiedliche Struktur in der Dicke besitzt. Solch eine Folie erfüllt die Funktionen der mehrschichtigen Folie, besitzt jedoch nicht die Nachteile, die mit der verschiedenen Adhäsion der Folienschichten an ihrer Verbindungsstelle und deren Trennung im Laufe der Aufbewahrung und des Betriebs verbunden sind. Der allmähliche Übergang der porigen Struktur zur porenfreien von der einen Folienfläche zu der anderen bewirkt die unterschiedliche Verteilung des Korrosionsinhibitors in der Foliendicke, wovon die Korrosionsschutzeigenschaften hauptsächlich abhängen. Solch eine Ausführung der Folie macht es möglich, eine hohe Korrosionsinhibitorkonzentration an einer ihrer Oberflächen zu erzeugen und die Ausscheidung des Korrosionsinhibitors nur in einer Richtung, d.h. nur in das Verpackungsvolumen der Metallgegenstände zu regeln. Es kommt dabei zur Verringerung des Verlustes an Korrosionsinhibitor und Steigerung der Schutzwirksamkeit sowie Verbesserung der Arbeitsbedingungen für Menschen in Abteilungen der Konservierung und Verpackung von Metallgegenständen.

Bei der erfindungsgemäßen Folie zeigt jede der Strukturen in ihrer Dicke ihre kennzeichnenden Merkmale und erfüllt ihre bestimmte Funktion. Die porenlose Struktur (kompaktes Polymer) nimmt die mechanische Grundlast auf und dient als Sperrschicht für den Inhibitor, indem sie sein Austreten in den Außenraum verhindert und damit den unproduktiven Inhibitorverlust vermindert sowie das Eindringen von aggressiven Mitteln in die Verpackung vermeidet. Die porige Struktur stellt ein polymeres Gel dar, dessen Hauptbesonderheit das Vorliegen der porösen polymeren Matrix ist, bei der die Poren mit einer inhibitorhaltigen Flüssigkeit gefüllt sind, wobei als solche der Korrosionsinhibitor oder sein Gemisch mit einem Weichmacher, z.B. Mineralöl, dient.

Im Laufe des Betriebs (oder der Aufbewahrung) scheiden die polymeren Gele spontan die inhibitorhaltige Flüssigkeit aus dem Materialvolumen (Synäreseerscheinung) aus, was zur Erzeugung einer erforderlichen Kontaktinhibitormenge auf der Folienfläche oder einer notwendigen Konzentration des flüchtigen Inhibitors in dem hermetisierbaren Volumen nützlich verwertet werden kann.

Bei Folien mit solcher Struktur bleiben ihre hohen physikalisch-mechanischen und Korrosionsschutzeigenschaften bei einer Dicke von 30 $\mu$m und darüber hinaus ohne Änderung, wodurch ihr Anwendungsbereich erweitert wird.

Die Aufgabe wird auch dadurch gelöst, daß ein Verfahren zur Herstellung einer polymeren Korrosionsschutz-Schlauchfolie, welches im Extrudieren einer Thermoplastschmelze und anschließenden Aufblasen derselben zu Schläuchen unter Abkühlung besteht, vorgeschlagen wird, bei dem man erfindungsgemäß den Hohlraum des Folienschlauches mit einer inhibitorhaltigen Flüssigkeit füllt und die Berührung der beweglichen Schlauchfolie mit dieser Flüssigkeit unter Konstanthalten des unter der Kristallisationslinie liegenden Flüssigkeitsstands verwirklicht, wobei die Differenz zwischen den Parametern der Löslichkeit der inhibitorhaltigen Flüssigkeit und des Thermoplastes unter 6 liegt.

Das erfindungsgemäße Verfahren bewirkt bei der einfachen Technologie in einem Zyklus die Herstellung der Folie mit der vorgegebenen Struktur wie oben beschrieben, indem es den hohen Wirkungsgrad bei der Sättigung des Thermoplastes mit dem Korrosionsinhibitor gewährleistet. Der Korrosionsinhibitorgehalt läßt sich in einem Bereich von 2 bis 12 Masse-% und der Porenvolumenteil von 15 bis 45 %, abhängig von der Dicke der porigen Schicht, ändern.

Dieses Verfahren bietet die Möglichkeit, ein breites Sortiment an Korrosionsinhibitoren verschiedener Wärmebeständigkeit zu verwenden, da die Temperatur bei der Sättigung des Thermoplastes mit dem Korrosionsinhibitor bedeutend niedriger als die Temperatur des Extrudierens des Gemisches von Thermoplast mit dem Inhibitor in Extrudern nach den bekannten Verfahren ist. Je nach der Kontaktdauer der inhibitorhaltigen Flüssigkeit und des polymeren Schlauches, ihren Parametern der Löslichkeit und der Ex trusionsgeschwindigkeit des Thermoplastes kann man die Dicke der weichgemachten Schicht regeln. Als kennzeichnendes Merkmal dieses Verfahrens erweist sich die Möglichkeit, die Korrosionsinhibitoren, die meist toxische Stoffe sind, im Hohlraum des entstehenden Schlauches zu isolieren und Menschen, die die Herstellung der Folie steuern, außer Gefahr zu bringen.

Zur Durchführung des erfindungsgemäßen Verfahrens dient eine Vorrichtung, die eine Zuführeinrichtung für die Zufuhr einer inhibitorhaltigen Flüssigkeit und einen Spritzkopf umfasst, der ein hohles Gehäuse

mit einem Mundstück und einen in dem Gehäuse vorgesehenen und durch das Mundstück hindurchgehenden Dorn aufweist, in dessen Körper wenigstens ein Druckluftkanal für die Druckluftzufuhr und wenigstens ein Flüssigkeitskanal für die Zufuhr der inhibitorhaltigen Flüssigkeit in den entstehenden Schlauch ausgebildet sind, wobei Gehäuse- und Mundstückwand mit der Dornwand einen Formkanal bilden, der in einen ringförmigen Formschlitz übergeht, wobei die Zuführeinrichtung erfindungsgemäß einen Behälter aufweist, der in gleicher Höhe wie die Austrittsöffnung des Flüssigkeitskanals in vertikaler Richtung hin- und herbewegbar angeordnet ist, wobei der Flüssigkeitskanal mit dem Behälter durch eine Rohrleitung verbunden ist und mit ihm kommunizierende Gefäße bildet.

Diese Vorrichtung ist betriebssicher und schafft ohne zusätzlichen Materialaufwand optimale Bedingungen für die Durchführung des Verfahrens mit allen seinen Vorteilen. Die Zuführeinrichtung sorgt dafür, im entstehenden Schlauch einen gleichbleibenden Flüssigkeitsstand aufrecht zuerhalten, der je nach der gegebenen Dicke der weichgemachten Schicht und der Korrosionsinhibitorkonzentration der Folie vorgegeben wird, die den sicheren Korrosionsschutz von verpackten Erzeugnissen aus verschiedenen Materialien unter unterschiedlichen Lagerungsbedingungen ermöglicht.

Es ist zweckmäßig, daß der oben angegebene Behälter eine Einrichtung enthält, die den Stand der im Behälter vorhandenen inhibitorhaltigen Flüssigkeit regelt. Durch Vorhandensein der Einrichtung zur Regelung des Flüssigkeitsstands im Behälter kann man die Zufuhr der inhibitorhaltigen Flüssigkeit in diesen Behälter automatisieren und den Flüssigkeitsstand im polymeren Schlauch sehr genau halten.

Um den erforderlichen Stand der inhibitorhaltigen Flüssigkeit im Schlauch in kleiner Menge zu erreichen und sie vor schneller Verdampfung und thermischer Zersetzung wegen hoher Temperaturen der Dornstirnseite zu schützen, ist es erwünscht, eine Büchse mit dem Dorn fluchtend in seiner Stirnseite anzubringen und die Austrittsöffnung des Flüssigkeitskanals außerhalb der Büchse vorzusehen, wobei das Verhältnis des Außendurchmessers der Büchse zum Dorndurchmesser an der Stirnseite in einem Bereich von 0,83 bis 0,95 zu wählen ist.

Zur Intensivierung der Diffusion der inhibitorhaltigen Flüssigkeit in die thermoplastische Grundlage in kleiner Menge und folglich zur Erhöhung ihres Gehalts in der Folie sowie zur Steigerung der Folieninhibitionssicherheit ist der inhibitorhaltigen Flüssigkeit eine Drehbewegung bei ihrer Berührung mit der laufenden Folie zweckmäßigerweise zu vermitteln, wobei das Verhältnis der Winkelgeschwindigkeit zur Bewegungsgeschwindigkeit der Schlauchfolie in einem Bereich von 30 bis 60 $m^{-1}$ gewählt wird.

Zur Durchführung dieses Verfahrens wird vorgeschlagen, bei der Vorrichtung eine entsprechende Dreheinrichtung vorzusehen, die z.B. als in der Nähe der Dornstirnseite angebrachtes Flügelrad ausgebildet ist, das mit einem Antrieb für dessen Versetzung in Drehung verbunden ist.

Die Aufgabe wird auch dadurch gelöst, daß ein Verfahren zur Herstellung der genannten Folie vorgeschlagen wird, das im Extrudieren der Thermoplastschmelze durch den Formkanal eines ringförmigen Spritzkopfes und anschließenden Aufblasen zu Schläuchen unter Abkühlung besteht, bei dem man erfindungsgemäß in der Zone am Formschlitzaustritt auf die Thermoplastschmelze die inhibitorhaltige unter einem Druck von 25 bis 45 MPa zugeführte Flüssigkeit in Richtung der Zone der Bildung der porigen Struktur der mit der inhibitorhaltigen Flüssigkeit gefüllten thermoplastischen Grundlage seitens der Schlauchinnenfläche einwirken läßt.

Dieses Verfahren ermöglicht es, erfindungsgemäß eine polymere Korrosionsschutzfolie mit ihrem Korrosionsinhibitorgehalt von 3 bis 12 $g/m^2$ unter Änderung des Porenvolumanteils von 10 bis 50 % herzustellen. Es empfiehlt sich jedoch, das Verfahren im Falle der Inhibition der thermoplastischen Grundlage mit wärmebeständigen Korrosionsinhibitoren zu verwenden, weil die Temperatur der Schmelze sehr hoch ist. Die nach diesem Verfahren hergestellte Folie weist eine hohe Festigkeit auf und erhält andere Vorteile, da die Bildung ihrer Struktur unter gleichzeitiger Verteilung des Korrosionsinhibitors in derselben damit in Verbindung steht, daß die Vernetzungsprozesse auf molekularer und übermolekularer Ebene verlaufen, die zum Ordnen von Gliedern der Molekülenkette, vorzugsweise in Längsrichtung, beim Ziehen des polymeren Schlauches führen.

Zur Durchführung dieses Verfahrens wird ein Spritzkopf vorgeschlagen, der ein hohles Gehäuse mit einem Mundstück und einen in dem Gehäuse vorgesehenen und durch das Mundstück hindurchgehenden Dorn enthält, in dem wenigstens ein Druckluftkanal für die Druckluftzufuhr in den entstehenden Schlauch und wenigstens ein Flüssigkeitskanal für die Zufuhr der inhibitorhaltigen Flüssigkeit ausgeführt sind, wobei Gehäuse- und Mundstückwand mit der Dornwand einen Formkanal bilden, der in einen ringförmigen Formschlitz übergeht, der Dornkörper im Bereich des Formschlitzes eine zum Formschlitz hin offene Ringnut aufweist, in der eine Büchse sitzt, die aus einem für die inhibitorhaltige Flüssigkeit durchlässigen Material besteht, und die Innenwand der Büchse und die Ringnutwände eine Kammer bilden.

Erfindungsgemäß ist die erwähnte Kammer mit dem Flüssigkeitskanal verbunden und die Außenfläche der Büchse konisch ausgeführt, wobei die größere Grundfläche der Büchse der Austrittsöffnung des

Formschlitzes zugewandt ist, während die Ringnutwand an der kleineren Grundfläche der Büchse einen ringförmigen Vorsprung gegenüber der Außenfläche der Büchse bildet.

Die polymere Korrosionsschutzfolie stellt man erfindungsgemäß nach dem ersten Verfahren durch Extrudieren der Thermoplastschmelze durch den Formkanal des Spritzkopfes und anschließendes Aufblasen durch Luft zu Schläuchen unter Außenkühlung her. Beim Aufblasen wird der Hohlraum des Folienschlauches gleichzeitig mit einer inhibitorhaltigen Flüssigkeit gefüllt, wobei als solche ein Korrosionsinhibitor in der flüssigen Phase oder seine Lösung in einem Weichmacher dient. Die sich bewegende Schlauchfolie wird in Berührung mit der inhibitorhaltigen Flüssigkeit gebracht, so daß ihr Stand unterhalb der Kristallisationslinie konstantgehalten wird. Die Differenz zwischen den Lösungsparametern der inhibitorhaltigen Flüssigkeit und des Thermoplastes soll unter 6 liegen. Das Wesen des Verfahrens, das die Bildung der porigen Struktur in der Folie unter Steigerung der scheinbaren Dichte bis eine der Thermoplastdichte gleiche Größe bewirkt, besteht im Folgenden.

Am Spritzkopfaustritt steht die zum Schlauch durch Luft aufgeblasene Thermoplastschmelze mit der inhibitorhaltigen Flüssigkeit in Kontakt. Da sie sich gegen die Kristallisationslinie in zähflüssigem Zustand befindet und sich mit der inhibitorhaltigen Flüssigkeit gut vereinigt, kommt es seitens der Schaluchinnenfläche zur Bildung einer Kolloidlösung auf 1/4 bis 2/3 Foliendicke. Mit der Abkühlung des Schlauches und dessen Verschiebung nach der Kirstallisationslinie zerfällt die Kolloidlösung im Thermoplast in Phasen, so daß eine porige Struktur entsteht, deren Poren mit der inhibitorhaltigen Flüssigkeit gefüllt sind. Die Berührungsbedingungen des Thermoplastes mit der inhibitorhaltigen Flüssigkeit sind so gewählt, daß die Auf lösung der letztgenannten im Thermoplast auf höchstens 2/3 seiner Dicke erfolgt, wodurch ein Teil der Folienstruktur in Richtung nach der Schlauchaußenfläche porenfrei bleibt.

Dadurch, daß die Kolloidlösung bei der Umsetzung der inhibitorhaltigen Flüssigkeit mit der Thermoplastschmelze entsteht und dann in Phasen zerfällt, wird die Struktur der Schlauchfolie inhomogen ausgebildet, wobei die Schlauchaußenfläche rein undurchlässig, d.h. porenfrei bleibt, während auf der Seite der Innenfläche die Ausbildung der porösen Struktur stattfindet, bei der in den Poren der Korrosionsinhibitor oder seine Lösung in Weichmacher konzentriert ist.

Die Struktur der Schlauchfolie zeichnet sich durch Erhöhung der scheinbaren Dichte bis zu einer der Thermoplastdichte gleichen Größe in Richtung von der Folieninnenfläche bis zu ihrer Außenfläche aus. Die inhomogene Struktur wird aus der Schmelze eines Thermoplastes, der durch den ringförmigen Einschlitz-Spritzkopf extrudiert wird, ausgebildet.

Die Tiefe der gebildeten porigen Struktur auf der Seite der Innenfläche des polymeren Schlauches hängt stark von der Kontaktzeit der inhibitorhaltigen Flüssigkeit mit der Polymerisationsschmelze ab, die sich nach dem Flüssigkeitsstand im Schlauchhohlraum und der Extrusionsgeschwindigkeit der Schmelze sowie nach der Temperatur der inhibitorhaltigen Flüssigkeit und der Polymerisationsschmelze richtet. Dies gilt dabei dann, wenn die Differenz zwischen den Lösungsparametern des Thermoplasts und der inhibitor haltigen Flüssigkeit unter 6 liegt. Bei einer höheren Differenz erfolgt die Bildung einer Kolloidlösung, die durch Plastizierung oder Auflösung der polymeren Basis durch die inhibitorhaltigen Flüssigkeit bedingt ist, nicht.

Dieses Verfahren zeigt noch eine Besonderheit. Die Innenfläche der Schlauchfolie, d.h. die Außenfläche der porigen Struktur bekommt einen spezifischen Reliefaufbau in Form von ungeordneten Falten und geglätteten Kämmen. Die entwickelte Folienfläche bewirkt eine intensivere Aufnahme des Inhibitors und begünstigt dabei die Festigkeitserhöhung von Schweißnähten beim Verpacken von Metallgegenständen und ermöglicht, den verpackten Produkten ein dekoratives Aussehen zu verleihen. Im Falle der entwickelten Folienfläche wird außerdem die zusätzliche Sättigung des polymeren Folienschlauches mit Korrosionsinhibitoren dann erreicht, wenn die Folie mit der inhibitorhaltigen Flüssigkeit nicht mehr in Kontakt steht. Dämpfe von flüchtigem Inhibitor, welche innerhalb des Schlauches über dem Spiegel der inhibitorhaltigen Flüssigkeit gebildet werden, werden auf der Folienfläche kondensiert und in der die porige Struktur füllenden Flüssigphase gelöst.

Der gewählte Stand der inhibitorhaltigen Flüssigkeit innerhalb des Schlauches ist von der Gesamtheit mehrerer Einflußgrößen, insbesondere von Lösungsparametern des Thermoplastes und der inhibitorhaltigen Flüssigkeit unter Extrusionsbedingungen (Temperatur, Druck und Geschwindigkeit beim Extrudieren), sowie einigen Daten der verwendbaren Materialien (Thermoplast- und Inhibitordichte, Zugfestigkeit und relative Dehnung der polymeren Folie, ihre Dichte und Kristallisationszeit, hydrostatischer Säulen druck der inhibitorhaltigen Flüssigkeit im Schlauchhohlraum usw.) abhängig.

Es ist erfahrungsgemäß festgestellt worden, daß dieser Stand für die verwendbaren Thermoplaste und inhibitorhaltigen Flüssigkeiten unterhalb der Kristallisationslinie des Thermoplastes vorzugsweise in einem Bereich von 3 bis 100 mm zweckmäßigerweise konstant zu halten ist. Oberhalb der Kristallisationslinie wird der hydrostatische Säulendruck der inhibitorhaltigen Flüssigkeit auf den polymeren Schlauch einwirken, ihn

nach außen sofort beim Austreten der Schmelze aus dem Formschlitz abdrücken und seine Bruchwahrscheinlichkeit vergrößern. Dies wird zu unerwünschten Folgen und zwar Unterbrechung des Extrusionsprozesses, Vergießen und Verlust an der inhibitorhaltigen Flüssigkeit, Störung der Arbeitsbedingungen, führen.

Um eine effektivere Inhibition des Thermoplastes bei einer minimalen Menge der inhibitorhaltigen Flüssigkeit zu erreichen, ist es zweckmäßig, der letztgenannten die Drehbewegung bei einem zwischen 30 und 60 $m^{-1}$ gewählten Verhältnis der Winkelgeschwindigkeit der Flüssigkeit zur Bewegungsgeschwindigkeit der Schlauchfolie zu vermitteln.

Der physikalische Sinn des Verhältnisses der Winkelgeschwindigkeit der inhibitorhaltigen Flüssigkeit ( $\omega$ ) zur Folienbewegungsgeschwindigkeit (v) besteht in der Drehzahl der inhibitorhaltigen Flüssigkeit je 1 m Längsverschiebung der zu extrudierenden Schlauchfolie. Durch Drehung der inhibitorhaltigen Flüssigkeit unter Konstanthalten des genannten Verhältnisses wird ein "Flüssigkeitswirbel" erzeugt, der auf der Innenfläche der Schlauchfolie geformt wird. Eine solche Bedingung für die Durch führung des Verfahrens hat folgende Vorteile. Erstens, indem man eine geringe Menge der inhibitorhaltigen Flüssigkeit über dem Dorn verwendet und die Drehgeschwindigkeit ändert, kann man den optimalen Flüssigkeitsstand bei der Berührung mit dem polymeren Schlauch halten, was die Sättigungseffektivität der Folie mit dem Korrosionsinhibitor ergibt, die Kontaktfläche der inhibitorhaltigen Flüssigkeit mit dem Dorn des Spritzkopfes, der eine genügend hohe Temperatur aufweist (sie liegt, z.B. bei Polyolefinen, zwischen 423 und 493 K) zu verkleinern und damit die thermische Zersetzung von Korrosionsinhibitoren zu verhindern ermöglicht. Zweitens nimmt die Wechselwirkung des Korrosionsinhibitors mit der Schlauchoberfläche wegen der Fliehkräfte der rotierenden Flüssigkeit zu, was die Intensivierung der Bildung der Kolloidlösung und die Diffusion der inhibitorhaltigen Flüssigkeit in die Foliendicke als Folge hat. Durch intensives Umrühren der inhibitorhaltigen Flüssigkeit wird drittens der Dampfmantel an der Thermoplastschmelze-Korrosionsinhibitor-Grenze, der bei deren statischen Kontakt auftreten kann, zerstört, wodurch die Eindringtiefe des Korrosionsinhibitors in den Thermoplast auch zunimmt. Zugleich wächst die Verfahrenssicherheit ("Durchbrüche" der Schlauchfolie werden ausgeschlossen) infolge gleichmäßiger Verteilung des Drukkes, mit dem die inhibitorhaltige Flüssigkeit auf den Thermoplast wirkt. Das Verhältnis $\frac{\omega}{v}$ wird aus folgenden Gründen gewählt. Bei einem unter 30 $m^{-1}$ liegenden Verhältnis tritt die Herabsetzung des Foliengehaltes an Korrosionsinhibitor auf, was die Verschlechterung des Korrosionsverhaltens der Folie hervorruft; bei einem über 60 $m^{-1}$ liegenden Verhältnis steigt der Inhibitordruck auf die Schlauchfolie infolge Erhöhung der Fliehkraft an, so daß die Schlauchfolie durchbrochen und damit die Verfahrenssicherheit bei der Folienherstellung herabgesetzt wird.

Zur Erhöhung der Festigkeitseigenschaften der Schlauchfolie unter Erhalten der Korrosionsschutzeigenschaften und Herstellung einer relativ glatten Schlauchinnenfläche wird die folgende Verfahrensführung empfohlen.

Man extrudiert die Thermoplastschmelze durch den Formkanal und Formschlitz des Spritzkopfes, in dessen Austrittszone auf die Schmelze eine inhibitorhaltige Flüssigkeit, d.h. ein Korrosionsinhibitor als Flüssigphase oder seine Lösung in einem Weichmacher, welche unter einem zwischen 25 und 45 MPa liegenden Druck zugeführt wird, in Richtung nach der Zone der Bildung der porigen Struktur der mit dieser Flüssigkeit gefüllten thermoplastischen Grundlage seitens der Schlauchinnenfläche einwirkt. Der Druckbereich wird unter Berücksichtigung von technologischen Gründen gewählt. Der Druck von 25 MPa entspricht dem minimalen Druck beim Extrudieren, und die obere Grenze von 45 MPa muß kein Ausfließen der inhibitorhaltigen Flüssigkeit durch den Formschlitz des Spritzkopfes in den ununterbrochen zu extrudierenden polymeren Schlauch unter hohen Extrusionsdrücken hervorrufen.

Bei der Einwirkung der inhibitorhaltigen Flüssigkeit auf die Thermoplastschmelze in zähflüssigem Zustand unter Drücken von 25 bis 45 MPa in ihrer Austrittszone am Formschlitz des Spritzkopfes finden im Thermoplast die Strukturänderungen auf der molekularen und übermolekularen Ebene statt, die das Ordnen der Molekülkettenglieder, vorzugsweise in Ziehlängsrichtung des polymeren Schlauches, mit sich bringen. Dies ergibt eine bedeutend höhere Folienzugfestigkeit. Durch Regelung des in einem Bereich von 25 bis 45 MPa liegenden Druckes der inhibitorhaltigen Flüssigkeit, der auf den Thermoplast wirkt, kann man die scheinbare Dichte der porigen Struktur, bei der der Porenvolumanteil zwischen 10 und 50 % schwankt, und den Foliengehalt an Korrosionsinhibitor in einem Bereich von 5 bis 12 $g/m^2$ ändern.

Durch Druckwirkung der inhibitorhaltigen Flüssigkeit auf die Thermoplastschmelze wird erreicht

- eine größere Diffusionsgeschwindigkeit der inhibitorhaltigen Flüssigkeit in die Schmelzdicke, die die Bildung der Kolloidlösung intensiviert und einen höheren Foliengehalt an Korrosionsinhibitoren sicherstellt, d.h. die Korrosionsschutzeigenschaften der Folie erhöht;
- eine Erhöhung der Folienfestigkeitseigenschaften.

Das erfindungsgemäße Verfahren ermöglicht zugleich, die Korrosionsschutz-Schlauchfolie mit einer glatteren Innenfläche herzustellen, was ihr eine höhere Durchsichtigkeit durch geringere Lichtstreuung

verleiht.

Als thermoplastische Grundlage dienen Hochdruckpolyethylen geringer Dichte (HDPE), Niederdruckpolyethylen hoher Dichte (NDPE) und Polypropylen (PP). Die technischen Daten der Polymeren sind in der Tabelle 1 angegeben.

TABELLE 1

| technische Daten | HDPE | NDPE | PP |
|---|---|---|---|
| Lösungsparameter $(MJ/m^3)^{1/2}$ | 17 | 16 | 19 |
| Dichte in $kg/m^3$ | 920 | 950 | 910 |
| Schmelzpunkt in K | 378 | 398 | 438 |
| rekative Drehung in % | 600 | 600 | 600 |
| Zugfestigkeit in MPa | 12 | 21 | 29 |

Zur Herstellung der Lösungen von Korrosionsinhibitoren (einer inhibitorhaltigen Flüssigkeit) sind thermoplastverträgliche Mineralöle, bedingt bezeichnet mit Buchstaben a, b, c als Weichmacher, zweckmäßigerweise zu verwenden:

a - Reines selektiv raffiniertes Mineralöl, welches aus schwach schwefelhaltigen paraffinischen und paraffinarmen Erdölen gewonnen wurde und folgende Eigenschaften hat: Dichte 0,89 $g/cm^3$ bei 293 K, Viskosität 14 cSt bei 293 K, Aschegehalt höchstens 0,003 %, Säurezahl 0,25 mg KOH/g, Stockpunkt 243 K, Flammpunkt im geschlossenen Tiegel 473 K.

b - Reines selektiv raffiniertes Mineralöl, welches aus schwach schwefelhaltigen Erdölen gewonnen ist und folgende Eigenschaften hat: Dichte 0,897 $g/cm^3$ bei 293 K, Viskosität 20,5 cSt bei 293 K, Aschegehalt höchstens 0,003 %, Säurezahl 0,03 mg KOH/g, Stockpunkt 255 K, Flammpunkt im geschlossenen Tiegel 523 K.

c - Reinstes Destillatmineralöl mit folgenden Eigenschaften: Dichte 0,894 $g/cm^3$ bei 293 K, Viskosität 49 cSt bei 293 K, 20 cSt bei 323 K, Stockpunkt 228 K, Flammpunkt im offenen Tiegel 436 K.

Als Korrosionsinhibitoren kann man beispielsweise folgende Produkte, bedingt bezeichnet mit Buchstaben A, B, C verwenden:

A - Mischung von Salzen des Dicyclohexylamins (43 Masse-%) und synthetischer Fettsäuren mit 10 bis 20 Kohlenstoffatomen (57 Masse-%) der allgemeinen Formel $(C_6H_{11})_2NHC_nH_{2n+1}COOH$, die ein pastöses Produkt mit 0,92 $g/cm^3$ Dichte und Schmelzpunkt von 288 bis 293 K darstellt, das in Ölen und organischen Lösungsmitteln löslich ist; der Dampfdruck beträgt 0,013 Pa bei 293 K;

B - Salz von Cyclohexylamin und synthetischen Fettsäuren der allgemeinen Formel $C_{13}H_{14}NO_2R$, worin R für $C_9$ - $C_{12}$ steht, als pastöser hellbrauner Stoff mit 880 $kg/m^3$ Dichte mit Schmelztemperatur 313 K, Stockpunkt 293 K; ist in Wasser, Öl und organischen Lösungsmitteln löslich;

C - gelb- bis hellbraune Flüssigkeit auf der Basis der technischen Fraktion sekundärer Amine von Fettsäuren und des Acrylonitrils der allgemeinen Formel

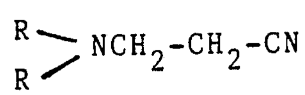

worin R für $C_nH_{2n+1}$ bei n = 7 bis 9 steht, Dichte 0,85 $g/cm^3$ bei 293 K, Viskosität 6 cSt bei 313 K, Stockpunkt 233 K, Siedepunkt 463 K bei 1,33 kPa Druck, Selbstentzündungstemperatur 533 K, löslich in Ölen, organischen Lösungsmitteln, Wasser, Dampfdruck 13,3 Pa bei 293 K.

Nachstehend werden konkrete Ausführungsbeispiele für die erfindungsgemäßen Verfahren zur Herstellung einer polymeren Korrosionsschutzfolie angeführt.

## Beispiel 1

Eine Schmelze von Hochdruckpolyethylen geringer Dichte ($\rho$ = 920 $kg/m^3$, Lösungsparameter $\delta_p$= 17 $(MJ/m^3)^{1/2}$ wird durch den Formkanal und -schlitz des Spritzkopfes extrudiert und durch Luft zu Schläuchen

unter seiner gleichzeitigen Abkühlung mit der Folienbewegungsgeschwindigkeit von 0,1 m/s aufgeblasen. Unterhalb der Kristallisationslinie wird der Schlauch mit der inhibitorhaltigen Flüssigkeit, deren Lösungsparameter $\delta_{F1}$ = 20,5 $(MJ/m^3)^{1/2}$ beträgt, gefüllt und ihre kontinuierliche Berührung mit der sich bewegenden Schlauchfolie durchgeführt. Der 8 mm betragende Stand der inhibitorhaltigen Flüssigkeit wird konstant gehalten. Die Dicke der zu extrudierenden Folie beträgt 150±10 µm.

Die inhibitorhaltige Flüssigkeit stellt eine 15 %ige Lösung des Inhibitors A im Weichmacher b dar. Die so erhaltene Schlauchfolie hat eine Polyethylenbasis, ausgeführt mit dem allmählichen Übergang von der porenfreien zur porigen Struktur, die durch ein System von mit der genannten Lösung des Korrosionsinhibitors A im Weichmacher b gefüllten geschlossenen und kommunizierenden Poren gebildet ist.

Die Erhöhung der scheinbaren Dichte der so erhaltenen Folie von 900 kg/m$^3$ bis zu einer der Dichte von HDPE gleichen Größe in Richtung von der Schlauchinnenfläche erfolgt auf 1/4 Foliendicke, d.h. 37,5 µm. Der Gehalt an der inhibitorhaltigen Flüssigkeit in der porigen Struktur beträgt 4 Masse-%. Die Eigenschaften der so erhaltenen Folie sind in der Tabelle 2 angegeben.

## Beispiel 2

Eine Korrosionsschutz-Schlauchfolie aus Polyethylen wird wie in Beispiel 1 hergestellt, nur daß der Stand der inhibitorhaltigen Flüssigkeit gleich 25 mm konstant gehalten wird.

Die Erhöhung der scheinbaren Dichte der so erhaltenen Folie von 892 kg/m$^3$ bis zu einer der Dichte von HDPE gleicher Größe in Richtung von der Schlauchinnenfläche weg erfolgt auf 1/2 Foliendicke, d.h. 75 µm. Der Gehalt der genannten inhibitorhaltigen Flüssigkeit in der porigen Struktur beträgt 7 Masse-%. Die Eigenschaften der so erhaltenen Folie sind in der Tabelle 2 angegeben.

## Beispiel 3

Die Herstellung einer Schlauchfolie aus Polyethylen wird wie in Beispiel 1 durchgeführt, nur daß der Stand der inhibitorhaltigen Flüssigkeit gleich 30 mm konstant gehalten wird.

Die Erhöhung der scheinbaren Dichte der so erhaltenen Folie von 886 kg/m$^3$ bis zu einer der Dichte HDPE gleichen Größe in Richtung von der Schlauchinnenfläche weg erfolgt auf 2/3 Foliendicke, d.h. 100 µm. Der Gehalt der inhibitorhaltigen Flüssigkeit in der porigen Struktur beträgt 11 Masse-%. Die Eigenschaften der so erhaltenen Folie sind in der Tabelle 2 angegeben.

## Beispiel 4

Eine Schmelze von NDPE hoher Dichte ( $\rho$ = 950 kg/m$^3$, Lösungsparameter $\delta_p$ = 16 $(MJ/m^3)^{1/2}$ wird durch den Formkanal und -schlitz des Spritzkopfes extrudiert und durch Luft zu Schläuchen unter seiner gleichzeitigen Abkühlung mit der Folienbewegungsgeschwindigkeit von 0,1 m/s aufgeblasen. Unterhalb der Kristallisationslinie wird der Schlauch mit einer 3 %igen Lösung des Korrosionsinhibitors B, dessen Lösungsparameter $\delta_B$ = 22 $(MJ/m^3)^{1/2}$ beträgt, gefüllt. Dann erfolgt seine kontinuierliche Berührung mit der sich bewegenden Schlauchfolie. Der 15 mm betragende Inhibitorstand wird konstant gehalten. Die Dicke der zu extrudierenden Folie beträgt 200±10 µm. Die so erhaltene Schlauchfolie ist strukturell inhomogen. Die porige Struktur ist mit dem Korrosionsinhibitor B gefüllt.

Die Erhöhung der scheinbaren Dichte der so erhaltenen Folie von 932 kg/m$^3$ bis zu einer der Dichte von HDPE gleichen Größe in Richtung von der Schlauchinnenfläche weg erfolgt auf 1/4 Foliendicke, d.h. 50 µm. Der Gehalt der erwähnten inhibitorhaltigen Flüssigkeit in der porigen Struktur beträgt 3 Masse-%. Die Eigenschaften der so erhaltenen Folie sind in der Tabelle 2 angegeben.

## Beispiel 5

Die Herstellung einer Korrosionsschutz-Schlauchfolie aus Polyethylen wird wie in Beispiel 4 durchgeführt, nur daß der Stand des Inhibitors B gleich 35 mm konstant gehalten wird.

Die Erhöhung der scheinbaren Dichte der so erhaltenen Folie bis zu einer Dichte von NDPE gleichen Größe in Richtung von der Schlauchinnenfläche erfolgt auf 1/2 Foliendicke, d.h. 100 µm. Der Gehalt der erwähnten inhibitorhaltigen Flüssigkeit in der porigen Struktur beträgt 6 Masse-%. Die Eigenschaften der so

hergestellten Folie sind in der Tabelle 2 angegeben.

Beispiel 6

Eine Korrosionsschutz-Schlauchfolie aus Polyethylen wird wie in Beispiel 4 hergestellt, nur daß der Stand des Inhibitors B gleich 45 mm konstant gehalten wird.

Die Erhöhung der scheinbaren Dichte der so erhaltenen Folie von 915 kg/m$^3$ bis zu einer der Dichte von NDPE gleichen Größe in Richtung von der Schlauchinnenfläche erfolgt auf 2/3 Foliendicke, d.h. etwa 133 µm. Der Gehalt der erwähnten inhibitorhaltigen Flüssigkeit in der porigen Struktur beträgt 10 Masse-%. Die Eigenschaften der so erhaltenen Folie sind in der Tabelle 2 angegeben.

Beispiel 7

Eine Polypropylenschmelze ( $\rho_p$ = 900 kg/m$^3$, Lösungsparameter $\delta_p$ = 19,0 (MJ/m$^3$)$^{1/2}$ wird durch den Formkanal und -schlitz des Spritzkopfes extrudiert und durch Luft zu Schläuchen unter seiner gleichzeitigen Abkühlung mit der Folienbewegungsgeschwindigkeit von 0,1 m/s aufgeblasen. Unterhalb der Kristallisationslinie wird der Schlauch im Anfangsmoment mit dem Korrosionsinhibitor "C", dessen Lösungsparameter $\delta_c$ = 21,5 (MJ/m$^3$)$^{1/2}$ gleich ist, ge füllt. Dann erfolgt seine Berührung mit der sich bewegenden Schlauchfolie. Der 15 mm betragende Stand des Inhibitors C wird konstant gehalten. Die Dicke der zu extrudierenden Folie beträgt 100±10 µm. Die so erhaltene Schlauchfolie ist strukturell inhomogen. Die porige Struktur ist mit dem Korrosionsinhibitor C gefüllt. Die Erhöhung der scheinbaren Dichte der so erhaltenen Folie von 891 kg/m$^3$ bis zu einer der Polypropylendichte gleichen Größe in Richtung von der Schlauchinnenfläche weg erfolgt auf 1/4 Foliendicke, d.h. 25 µm. Der Gehalt der erwähnten inhibitorhaltigen Flüssigkeit in der porigen Struktur beträgt 4 Masse-%. Die Eigenschaften der so erhaltenen Folie sind in der Tabelle 2 angegeben.

Beispiel 8

Eine Korrosionsschutz-Schlauchfolie aus Polypropylen wird wie in Beispiel 7 hergestellt, nur daß der Stand des Inhibitors C gleich 35 mm konstant gehalten wird.

Die Erhöhung der scheinbaren Dichte der so erhaltenen Folie von 883 kg/m$^3$ bis zu einer der Polypropylendichte gleichen Größe in Richtung von der Schlauchinnenfläche weg erfolgt auf 1/2 Foliendikke, d.h. 50 µm. Der Gehalt der porigen Struktur an Inhibitor C beträgt 8 Masse-%. Die Eigenschaften der so erhaltenen Folie sind in der Tabelle 2 angegeben.

Beispiel 9

Eine Korrosionsschutz-Schlauchfolie aus Polypropylen wird wie in Beispiel 7 hergestellt, nur daß der Stand des In hibitors C gleich 60 mm konstant gehalten wird.

Die Erhöhung der scheinbaren Dichte der so erhaltenen Folie von 872 kg/m$^3$ bis zu einer der Polypropylendichte gleichen Größe in Richtung von der Schlauchinnenfläche erfolgt auf 2/3 Foliendicke, d.h. etwa 66 µm. Der Gehalt der porigen Struktur am Inhibitor C beträgt 12,0 Masse-%. Die Eigenschaften der so erhaltenen Folien sind in der Tabelle 2 angegeben.

Beispiel 10

Eine Schmelze von HDPE ( $\rho_p$ = 920 kg/m$^3$, Lösungsparameter $\delta_p$ = 17 (MJ/m$^3$)$^{1/2}$) wird durch den Formkanal und -schlitz des Spritzkopfes extrudiert und durch Luft zum Schlauch unter seiner gleichzeitigen Abkühlung mit der Folienbewegungsgeschwindigkeit von 0,1 m/s aufgeblasen. Unterhalb der Kristallisationslinie wird der Schlauch auf 10 mm große Höhe mit einer 30 %igen Lösung des Korrosionsinhibitors A im Weichmacher b ( $\delta_A$ = 20,5 (MJ/m$^3$)$^{1/2}$) gefüllt und mit einer Winkelgeschwindigkeit ( $\omega$) von 3 l/s in Drehbewegung gebracht. Das Verhältnis $\frac{\omega}{v}$ beträgt 30 m$^{-1}$. Die Dicke der zu extrudierenden Folie beträgt 150 µm. Die so erhaltene Schlauchfolie ist strukturell inhomogen. Die porige Struktur ist mit der erwähnten

inhibitorhaltigen Flüssigkeit gefüllt. Die Erhöhung der scheinbaren Dichte der so erhaltenen Folie von 899 kg/$m^3$ bis zu einer der Dichte von HDPE gleichen Größe in Richtung von der Schlauchinnenfläche erfolgt auf 1/4 Foliendicke, d.h. etwa 37 $\mu$m. Der Gehalt der porigen Struktur an der erwähnten inhibitorhaltigen Flüssigkeit beträgt 4 g/$m^2$. Die Eigenschaften der so erhaltenen Folie sind in der Tabelle 2 angegeben.

Beispiel 11

Eine Korrosionsschutz-Schlauchfolie aus Polyethylen wird wie in Beispiel 10 hergestellt, nur daß der Schlauch auf 10 mm große Höhe gefüllt wird. Die Extrusionsgeschwindigkeit der Folie beträgt 0,1 m/s, die Winkelgeschwindigkeit bei der Drehung der inhibitorhaltigen Flüssigkeit 5 l/s, das Verhältnis $\frac{\omega}{v}$ 60$m^{-1}$.

Die Erhöhung der scheinbaren Dichte der so erhaltenen Folie von 890 kg/$m^3$ bis zu einer der Dichte von HDPE gleichen Größe in Richtung von der Schlauchinnenfläche weg erfolgt auf 1/2 Foliendicke, d.h. 75 $\mu$m. Der Gehalt der porigen Struktur an der erwähnten inhibitorhaltigen Flüssigkeit beträgt 8 g/$m^2$. Die Eigenschaften der so erhaltenen Folie sind in der Tabelle 2 angegeben.

Beispiel 12

Eine Korrosionsschutz-Schlauchfolie aus Polyethylen wird wie in Beispiel 10 hergestellt, nur daß der Schlauch auf 10 mm große Höhe gefüllt wird; die Folienbewegungsgeschwindigkeit beträgt 0,1 m/s und die Winkelgeschwindigkeit bei der Drehung der inhibitorhaltigen Flüssigkeit 6 l/s, das Verhältnis $\frac{\omega}{v}$ 60 $m^{-1}$.

Die Erhöhung der scheinbaren Dichte der so erhaltenen Folie von 886 kg/$m^3$ bis zu einer der Dichte von HDPE gleichen Größe in Richtung von der Schlauchinnenfläche weg erfolgt auf 2/3 Foliendicke, d.h. etwa 112 $\mu$m. Der Gehalt der porigen Struktur an der erwähnten inhibitorhaltigen Flüssigkeit beträgt 10 g/$m^2$. Die Eigenschaften der so erhaltenen Folie sind in der Tabelle 2 angegeben.

Beispiel 13

Eine Schmelze von NDPE ( $\rho_p$ = 950 kg/$m^3$, Lösungsparameter $\delta_p$ = 16 $(MJ/m^3)^{1/2}$) wird durch den Formkanal und -schlitz des Spritzkopfes extrudiert und durch Luft zum Schlauch unter seiner gleichzeitigen Abkühlung mit der Folienbewegungsgeschwindigkeit von 0,1 m/s aufgeblasen.

In der Zone des Formschlitzaustritts läßt man auf die Schmelze von NDPE die 3 %ige Lösung des Inhibitors A im Weichmacher a ( $\delta_A$ = 20,5 $(MJ/m^3)^{1/2}$), die unter einem Druck von 25 MPa zugeführt wird, in Richtung einwirken, die die Ausbildung der Schlauchinnenfläche der porigen Struktur von NDPE bewirkt, die mit der erwähnten inhibitorhaltigen Flüssigkeit gefüllt ist.

Die Erhöhung der scheinbaren Dichte der so erhaltenen Folie von 928 kg/$m^3$ bis zu einer der Dichte von NDPE gleichen Größe in Richtung von der Schlauchinnenfläche weg erfolgt auf 1/4 Foliendicke, d.h. etwa 50 $\mu$m. Der Gehalt der porigen Struktur an der erwähnten inhibitorhaltigen Flüssigkeit beträgt 5 g/$m^2$. Die Eigenschaften der so erhaltenen Folie sind in der Tabelle 2 angegeben.

Beispiel 14

Die Korrosionsschutz-Schlauchfolie aus Polyethylen wird wie in Beispiel 13 hergestellt, nur daß man auf die Schmelze von NDPE die unter einem Druck von 36 MPa zugeführte inhibitorhaltige Flüssigkeit einwirken läßt.

Die Erhöhung der scheinbaren Dichte der so erhaltenen Folie von 920 kg/$m^3$ bis zu einer der Dichte von NDPE gleichen Größe in Richtung von der Schlauchinnenfläche weg erfolgt auf 1/2 Foliendicke, d.h. etwa 100 $\mu$m. Der Gehalt der porigen Struktur an der erwähnten inhibitorhaltigen Flüssigkeit beträgt 9 g/$m^2$. Die Eigenschaften der so erhaltenen Folie sind in der Tabelle 2 angegeben.

Beispiel 15

Die Korrosionsschutz-Schlauchfolie aus Polyethylen wird wie in Beispiel 13 hergestellt, nur daß man auf die Schmelze von NDPE die unter einem Druck von 45 MPa zugeführte inhibitorhaltige Flüssigkeit

einwirken läßt.

Die Erhöhung der scheinbaren Dichte der so erhaltenen Folie von 916 $kg/m^3$ bis zu einer der Dichte von NDPE gleichen Größe in Richtung von der Schlauchinnenfläche weg erfolgt auf 2/3 Foliendicke, d.h. etwa 133 µm. Der Gehalt der porigen Struktur an der erwähnten inhibitorhaltigen Flüssigkeit beträgt 12 $g/m^3$. Die Eigenschaften der so erhaltenen Folie sind in der Tabelle 2 angegeben.

Beispiel 16 (Vergleichsbeispiel gemäß SU- A- 1207125)

Eine Korrosionsschutz-Schlauchfolie wird aus HDPE ( $\rho_p$ = 920 $kg/m^3$) hergestellt.

Die Mischung von HDPE und Weichmacher a, genommen im Massenverhältnis von 80 : 20, wird durch den Formschlitz des Spritzkopfes extrudiert und durch Luft zum Schlauch unter seiner gleichzeitigen Abkühlung mit der Folienbe wegungsgeschwindigkeit von 0,1 m/s aufgeblasen. In den Hohlraum des entstehenden Schlauches werden Dämpfe von wenig löslichem flüchtigem Korrosionsinhibitor A bei 100° C zugeführt. Die so erhaltene Schlauchfolie enthält 1,5 Masse-% Korrosionsinhibitor.

Die Eigenschaften der nach dem erfindungsgemäßen und bekannten Verfahren hergestellten Korrosionsschutz-Schlauchfolie wurden unter besonderer Berücksichtigung der Bruchspannung und des Korrosionsschutzverhaltens bewertet.

Die Bruchspannung wurde auf einer Zerreißmaschine bei einer Bewegungsgeschwindigkeit des Greifers von 50 mm/min ermittelt. Das Korrosionsschutzverhalten der Folie wurde bei höheren Werten der relativen Luftfeuchte und Temperaturen unter periodischer Feuchtekondensation an in Folie verpackten Metallkörpern eingeschätzt.

Stahlprüfkörper (aus Kohlenstoffstahl mit einem Kohlenstoffgehalt von 0,05 bis 0,11 Masse-%) mit 25x25x1 mm Abmessungen wurden mechanisch von Korrosionsprodukten gereinigt, in Benzin, dann in Ethanol gewaschen und getrocknet. Hiernach wurden die Prüfkörper in die erhaltene Korrosionsschutzfolie hermetisch verpackt und unter Raumbedingungen bei einer Temperatur von 20±2° C innerhalb von 72 Stunden gehalten. Dann wurden die Prüfkörper in eine Feuchtigkeitskammer eingebracht. Die in die Schlauchfolie hermetisch verpackten Stahlprüfkörper wurden bei einer Temperatur von 55±5° C und relativer Luftfeuchtigkeit von 98±2 % innerhalb von 8 Stunden temperiert. Die Feuchtekondensation an der Oberfläche von Stahlprüfkörpern wurde durch ihre Temperaturerniedrigung um 35° C ausgelöst, und die verpackten Prüfkörper wurden bei einer Temperatur von 20±2° C innerhalb von 16 Stunden gehalten. Die Prüfungen in der Feuchtigkeitskammer betrugen 1 Arbeitszyklus. Sie wurden bis zum Auftreten der ersten Korrosionsstellen an Stahlprüfkörpern durchgeführt.

TABELLE 2

| Folie, hergestellt nach Beispiel Nr. | Thermoplastische Grundlage | Bruchspannung in MPa | Anzahl von Arbeitscyclen bis zum Auftreten der ersten Korrosionsstellen |
|---|---|---|---|
| 1 | HDPE | 12,6 | 25...26 |
| 2 | HDPE | 12,6 | 38...39 |
| 3 | HDPE | 12,6 | 40...42 |
| 4 | HDPE | 23,7 | 27...28 |
| 5 | NDPE | 23,7 | 35...36 |
| 6 | NDPE | 23,7 | 40...43 |
| 7 | PP | 25,4 | 30...32 |
| 8 | PP | 25,4 | 45...47 |
| 9 | PP | 25,4 | 50...53 |
| 10 | HDPE | 12,6 | 38...40 |
| 11 | HDPE | 12,6 | 43...45 |
| 12 | HDPE | 12,6 | 45...48 |
| 13 | NDPE | 25,0...26,0 | 30...31 |
| 14 | NDPE | 34,0...35,0 | 40...42 |
| 15 | NDPE | 43,0...44,0 | 44...45 |
| 16 (Vergleichsbeispiel) | HDPE | 12,4 | 15...17 |

Nachstehend wird die Erfindung an Hand von Vorrichtungen zur Herstellung der polymeren Korrosionsschutzfolie gemäß der Erfindung unter Bezugnahme auf die beigefügten Zeichnungen näher erläutert. Es zeigt:

Fig. 1 eine schematische Teilansicht einer Vorrichtung zur Durchführung des Verfahrens zur Herstellung einer polymeren Korrosionsschutzfolie mit einer ersten Ausführungsform eines Spritzkopfes,

Fig. 2 eine zweite Ausführungsform des Spritzkopfes von Fig. 1 im Längsschnitt,

Fig. 3 eine erste Ausführungsform des im Spritzkopf von Fig. 2 vorhandenen Flüssigkeitskanals für die Zufuhr einer inhibitorhaltigen Flüssigkeit im vergrößerten Maßstab,

Fig. 4 eine weitere Ausführungsform des Flüssigkeitskanals von Fig. 3,

Fig. 5 eine dritte Ausführungsform des Spritzkopfes von Fig. 1 im Längsschnitt,

Fig. 6 schematisch eine Gesamtansicht des Spritzkopfes zur Durchführung des erfindungsgemäßen Verfahrens.

Die in Fig. 1 gezeigte Vorrichtung weist einen Spritzkopf 1 auf, der ein hohles Gehäuse 2, ein an diesem angeordnetes Mundstück 3 und einen durch das Mundstück hindurchgehenden und im Gehäuse 2 vorgesehenen geteilten Dorn 4 umfasst. In dem Dorn 4 sind zwei miteinander verbundene Druckluftkanäle 5, 6 für eine Druckluftzufuhr in einen zu extrudierenden polymeren Schlauch 7 und ein Flüssigkeitskanal 8 für die Zufuhr einer inhibitorhaltigen Flüssigkeit in den Schlauch 7 ausgebildet. Der Druckluftkanal 6 ist mit einem Stutzen 9 versehen, dessen Austrittsöff nung über dem Pegel der inhibitorhaltigen Flüssigkeit in dem Schlauch 7 liegt. Die Wände des Gehäuses 2 und des Mundstücks 3 bilden mit der Wand des Dorns 4 einen Formkanal 10, der in einen ringförmigen Formschlitz 11 übergeht. Der Spritzkopf 1 ist an einen Extruder 12 angeschlossen, der eine Thermoplastschmelze durch den Formkanal 10 in den Spritzkopf 1 zuführt. Über dem Mundstück 3 befindet sich außerhalb des entstehenden Schlauches 7 ein ringförmiger Sammler 12a für eine Druckluftkühlung des Schlauches.

Die Vorrichtung weist zudem eine Zuführeinrichtung 13 für die Zufuhr der inhibitorhaltigen Flüssigkeit in den Schlauch 7 auf, die aus einem beheizten Druckbehälter 14, einem mit diesem über ein Überführungsventil 15 verbundenen Vakuumbehälter 16 mit Vakuumpumpe 17 besteht, die zum Auspumpen der inhibitorhaltigen Flüssigkeit aus dem Hohlraum des Schlauches 7 vor Arbeitsbeendigung oder beim Durchbrechen des Schlauches dient.

Der Druckbehälter 14 ist mit einer Eintrittsöffnung 22 eines Behälters 23 durch eine mit einem Ventil 19 und einem Rückschlagventil 20 versehene Rohrleitung 18 über einen Verteiler 21 verbunden.

Der Behälter 23 ist in vertikaler Richtung hin- und herbeweglich angeordnet. Die Hin- und Herbewegung wird durch ein kinematisches Elementenpaar, bestehend aus Schraube und Mutter 24 vollzogen. Die Mutter 24 ist am Gehäuse des Behälters 23 befestigt. Die Schraube wird von einem Antrieb 25 betätigt. Der Druckbehälter 14 ist für seine Luftdruckregelung an ein Druckminderventil 26 angeschlossen, das mit einer ein Ventil 28 aufweisenden Druckluftleitung 27 in Verbindung steht.

Der Behälter 23 weist eine Einrichtung 29 auf, die als ein Schwimmer 30 mit Ventilen 31 und 32 für die Eintrittsöffnung 22 bzw. eine Austrittsöffnung 33 ausgebildet ist. Die Austrittsöffnung 33 ist über eine Rohrleitung 34 mit dem Flüssigkeitskanal 8 im Dorn 4 verbunden. Der Behälter 23 und der Flüssigkeitskanal 8 bilden so miteinander in Verbindung stehende Gefäße. An die Rohrleitung 34 ist außerdem eine Rohrleitung 35 angeschlossen, die über einen Verteiler 36 mit dem Vakuumbehälter 16 in Verbindung steht.

Bei dem in den Fig. 2 und 3 gezeigten Spritzkopf ist die Stirnseite des Dornes 4 mit einer Büchse 37 versehen, die wenigstens eine Öffnung 38 in ihrer Wand aufweist. Angrenzend an die Öffnung 38 ist auf der Stirnseite des Dorns 4 eine freiliegende Nut 39 ausgebildet. Die Büchse 37 kann,wie in Fig. 2 gezeigt, in eine Bohrung in den Dorn 4 eingepresst oder auf eine andere Weise befestigt sein. Die Büchse 37 kann zylindrisch oder konisch ausgebildet sein, wobei das Verhältnis zwischen dem Durchmesser der Büchse 37 und dem des Dornes 4 an seiner Stirnseite in einem Bereich von 0,83 bis 0,95 liegt.

Der Dorn 4 weist einen Hohlraum 40 auf, in dem zwei Rohre 41 und 42 fluchtend angeordnet sind, die innerhalb der Büchse 37 über die Stirnseite des Dorns 4 hinausragen. Das Rohr 41 bildet einen Druckluftkanal für die Druckluftzufuhr in den Schlauch 7. Ein Flüssigkeitskanal 43 dient für die Zufuhr der inhibitorhaltigen Flüssigkeit in den Schlauch 7. Der Flüssigkeitskanal 43 besteht aus einem durch die Außenfläche des Rohrs 41 und die Innenfläche des Rohrs 42 gebildeten Ringkanal 44 einer Rohrleitung 45 (Fig. 3), deren eines Ende an den hinausragenden Teil des Rohres 42 angeschlossen und deren anderes Ende in der Öffnung 38 der Büchse 37 befestigt ist, und aus der Nut 39, die die Austrittsöffnung des Flüssigkeitskanals 43 bildet.

Fig. 4 zeigt eine weitere Ausführungsform des Flüssigkeitskanals 43 im Bereich der Büchse 37. Der Flüssigkeitskanal 43 besteht hier aus dem Ringkanal 44 und einem mit diesem verbundenen ringförmigen Kanal 46, der unterhalb der Büchse 37 im Dorn 4 ausgebildet ist. Die Austrittsöffnung des Kanals 46 befindet sich in der Stirnseite des Dornes 4 und dient zugleich als eine Austrittsöffnung des ganzen Flüssigkeitskanals 43.

In dem Dorn 4 des Spritzkopfes von Fig. 5 sind zwei miteinander in Verbindung stehende Druckluftkanäle 5, 6 für die Druckluftzufuhr und ein Flüssigkeitskanal 8 für die Inhibitorzufuhr in den Schlauch 7 vorgesehen. Im Druckluftkanal 6 ist der über die Stirnseite des Dornes 4 hinausragende Stutzen 9 angeordnet.

In dem Dorn 4 ist außerdem ein mit dem Druckluftkanal 6 fluchtender Kanal 47 ausgebildet. Durch die Kanäle 6 und 47 geht eine Welle 48 hindurch, deren eines Ende mit einem Antrieb 49 für die Drehbewegung verbunden ist, während das andere aus dem Stutzen 9 ausgehende Ende eine Dreheinrichtung 50 trägt, die die durch den Flüssigkeitskanal 8 zugeführte inhibitorhaltige Flüssigkeit im Schlauch 7 in Drehung versetzt. Die Dreheinrichtung 50 ist als ein in der Nähe der Dornstirnseite angebrachtes Flügelrad 51 ausgebildet, dessen Mitnehmer 52 am Ende der Welle 48 befestigt sind.

Der Spritzkopf 1 von Fig. 6 ist an den Extruder 12 angeschlossen und mit diesem durch ein Endstück 53 verbunden. Er weist das hohle Gehäuse 2, das daran angebrachte Mundstück 3 und den im Gehäuse 2 vorgesehenen und durch das Mundstück hindurchgehenden Dorn 4 auf. Die Wände des Gehäuses 2 und des Mundstücks 3 bilden mit den Wänden des Dornes 4 den Formkanal 10, der im Bereich des Mundstücks 3 in den ringförmigen Formschlitz 11 übergeht.

Der Formkanal 10 ist für die Zufuhr der Schmelze in denselben durch einen Kanal 54 im Dorn 4 mit dem Endstück 53 verbunden.

In dem Dorn 4 sind der Druckluftkanal 5 für die Druckluftzufuhr in den Schlauch 7 und ein T-förmiger Flüssigkeitskanal 55 für die Zufuhr der inhibitorhaltigen Flüssigkeit vorgesehen, dessen Flansche 56 der Stirnseite des Dornes 4 zugewandt sind.

Im Bereich des Formschlitzes 11 weist der Dorn 4 eine in Richtung des Formschlitzes offene Ringnut 57 auf, in der eine aus einem für die inhibitorhaltige Flüssigkeit durchlässigen Material bestehende konische Büchse 58 sitzt, deren größere Grundfläche 59 der Austrittsöffnung des Formschlitzes 11 zugewandt ist.

Die Innenwand der Büchse 58 und die Wände der Ringnut 57 bilden eine Kammer 60, die mit den Flanschen 56 des Flüssigkeitskanals 55 verbunden ist. Die an der kleineren Grundfläche 61 der Büchse 58 liegende Wand der Ringnut 57 bildet gegenüber der Außenfläche der Büchse einen ringförmigen Vorsprung 62.

Der Vorsprung 62 und die Wände der Büchse 58 erzeugen das Stufenprofil des Formschlitzes 11.

Die Vorrichtung arbeitet wie folgt:

Aus dem Extruder 12 gelangt die Thermoplastschmelze in den Formkanal 10 und den Formschlitz 11 des Spritzkopfes 1. Gleichzeitig wird die Druckluft den Druckluftkanälen 5 und 6 zugeführt. Die durch den Stutzen 9 aus dem Druckluftkanal 6 zugeführte Druckluft bläst den aus dem Formschlitz II austretenden zähflüssigen Thermoplast zum Schlauch 7 mit den erforderlichen Abmessungen auf. Nachdem der Extruder 12 und der Spritzkopf 1 auf den jeweiligen Betrieb der Herstellung der Schlauchfolie eingestellt worden sind, wird die Zuführeinrichtung für die Zufuhr der inhibitorhaltigen Flüssigkeit in den entstehenden Schlauch 7 eingeschaltet. Die Druckluft wird durch die Druckluftleitung 27 über das geöffnete Ventil 28 und das Druckminderventil 26 in den Druckbehälter 14 gefördert. Gleichzeitig wird das Ventil 19 geöffnet, und die inhibitorhaltige Flüssigkeit strömt unter Wirkung des überschüssigen Druckes aus dem Druckbehälter 14 durch die Rohleitung 18, über den Verteiler 21 und das Rücklaufventil 20 in die Eintrittsöffnung 22 des Behälters 23 ein. Nach dem Auftauchen des Schwimmers 30 öffnet das Ventil 32 die Austrittsöffnung 33, und die inhibitorhaltige Flüssigkeit gelangt durch die Rohrleitung 34 in den Flüssigkeitskanal 8 des Spritzkopfes 1 und weiter in den Hohlraum des zu extrudierenden polymeren Schlauches 7, der dabei über die Stirnfläche des Dornes 4 fließt. Durch Übertragung der Drehbewegung der durch den eingeschalteten Motor angetriebenen Schraube auf die am Gehäuse des Behälters 23 befestigte Mutter kann sich in vertikaler Richtung der Behälter 23 verschieben.

Der Behälter 23 wird durch Verschiebung auf gleiche Höhe mit der Austrittsöffnung des Flüssigkeitskanals 8 eingestellt, wodurch die inhibitorhaltige Flüssigkeit aus dem Flüssigkeitskanal 8 ausfließt und den Schlauch 7 bis auf ein Niveau auffüllt, das unterhalb der Kristallisationslinie des Thermoplastes, d.h. in dem Bereich, in dem der Thermoplast aus dem zähflüssigen in den elastischen Zustand übergeht, liegt. Der Flüssigkeitsstand wird entsprechend den erforderlichen Korrosionsschutz- und physikalisch-mechanischen Eigenschaften der hergestellten Folie geregelt. Die Menge der in den Behälter zugeführten inhibitorhaltigen Flüssigkeit muß ihrem Verbrauch für die Inhibition des Thermoplastes gleich sein oder diesen Verbrauch übersteigen. Übersteigt die Flüssigkeitsmenge im Behälter 23 den gegebenen Stand, so taucht der Schwimmer 30 auf, und das Ventil 31 schließt die Eintrittsöffnung 22. Gegen Beendigung der Arbeit oder bei Durchbruch des Schlauches 7 werden Elektromagnete der Verteiler 21 und 36 und die Vakuumpumpe 17 eingeschaltet. Die Zufuhr der inhibitorhaltigen Flüssigkeit in den Behälter 23 wird gestoppt und die Rohrleitung 35, die den Flüssigkeitskanal 8 des Dornes 4 und den Behälter 23 mit dem Vakuumbehälter 16 in Verbindung bringt, geöffnet. Die in dem Schlauch 7 und dem Behälter 23 befindliche inhibitorhaltige

Flüssigkeit wird in den Vakuumbehälter 16 abgepumpt. Dadurch wird, falls die Arbeit unterbrochen wird und der Schlauch 7 durchbricht, das Zerfließen der Flüssigkeit über den Spritzkopf 1 und ihre Verdampfung verhindert, wodurch die Betriebsbedingungen verbessert und Verluste an der inhibitorhaltigen Flüssigkeit herabgesetzt werden. Nach dem Einfüllen in den Vakuumbehälter 16 wird das Überführungsventil 15 geöffnet und die inhibitorhaltige Flüs sigkeit wird in den Druckbehälter 14 gegossen. Die hergestellte polymere Korrosionsschutz-Schlauchfolie wird auf Walzen zwecks Wickelns zu Rollen und Versandes an Verbraucher zugeführt.

Dadurch, daß die Zuführeinrichtung 13 den Behälter 23 aufweist, der hin- und herbeweglich in vertikaler Richtung auf gleicher Höhe mit der Austrittsöffnung des Flüssigkeitskanals 8 angeordnet ist, und der Flüssigkeitskanal 8 durch die Rohrleitung 34 mit diesem Behälter 23 in Verbindung steht und mit ihm miteinander in Verbindung stehende Gefäße bildet, läßt sich der Pegel der inhibitorhaltigen Flüssigkeit im Schlauch 7 ändern. Die Zeit, in der die Innenfläche des zu extrudierenden polymeren Schlauches 7 mit der inhibitorhaltigen Flüssigkeit in Kontakt steht, ändert sich dabei von einer minimalen, in der eine geringe Flüssigkeitsschicht über dem Dorn 4 liegt bis zu einer maximalen in der die Schicht der inhibitorhaltigen Flüssigkeit im Schlauch 7 auf der Kristallisationslinie des Thermoplastes liegt. Dementsprechend ändert sich die Eindringtiefe der inhibitorhaltigen Flüssigkeit in die Thermoplastdicke und folglich ihre Konzentration im Thermoplast. Dies ermöglicht es, Folien mit unterschiedlicher Konzentration der inhibitorhaltigen Flüssigkeit in der porösen Folienstruktur für die Verpackung von Gegenständen aus unterschiedlichen Materialien und für unterschiedliche Lagerungsbedingungen zu wählen.

Mit einem Spritzkopf 1, wie er in den Fig. 2, 3 und 4 gezeigt ist, können gewisse Vorteile bei der Realisierung des Verfahrens auf der erfindungsgemäßen Vorrichtung erzielt werden.

Die Thermoplastschmelze gelangt aus dem Extruder 12 in den Formkanal 10 und den Formschlitz 11. Gleichzeitig wird in das Rohr 41 Druckluft zugeführt, durch die der aus dem Formschlitz ausfließende Thermoplast zum Schlauch aufgeblasen wird. Gleichzeitig wird aus der Zuführeinrichtung 13, die wie oben beschrieben arbeitet, die inhibitorhaltige Flüssigkeit dem Flüssigkeitskanal 43 zugeführt. Da der Flüssigkeitskanal 43 mehrere Abschnitte aufweist, strömt die inhibitorhaltige Flüssigkeit, die in den durch die Innenfläche des zu extrudierenden Schlauches 7 und die Außenfläche der Büchse 37 gebildeten Raum gelangt, in einer bestimmten Reihenfolge durch den Ringkanal 44, die Rohrleitung 45 und die Nut 39 (Fig. 3) oder durch den Ringkanal 44 und den Kanal 46 (Fig. 4). Man regelt den Pegel der inhibitorhaltigen Flüssigkeit im Schlauch 7, indem man den Behälter 23 in vertikaler Richtung auf gleiche Höhe mit der Austrittsöffnung des Flüssigkeitskanals 43 einstellt. Vor Beendigung der Arbeit oder beim Durchbruch des Schlauches 7 wird die darin und im Behälter 23 befindliche inhibitorhaltige Flüssigkeit in den Druckbehälter 14 abgepumpt.

Die Büchse 37 und die Austrittsöffnung des Flüssigkeitskanals 43 außerhalb dieser Büchse 37 halten den erforderlichen Pegel der inhibitorhaltigen Flüssigkeit bei kleiner Menge konstant.

Bei Beschädigung der Folie läßt sich die inhibitorhaltige Flüssigkeit schnell aus dem Hohlraum des Schlauches 7 entfernen, wodurch die Betriebssicherheit der Vorrichtung erhöht wird, da ein Auswurf des Inhibitors ins Freie vermieden wird. Dies verbessert außerdem die Arbeitsbedin gungen und vermindert den Aufwand an inhibitorhaltiger Flüssigkeit. Die geringe Menge inhibitorhaltiger Flüssigkeit im Hohlraum des Schlauches 7 stört außerdem nicht die Temperaturführung beim Extrudieren und Aufblasen des Schlauches 7.

Das Verhältnis des Außendurchmessers der Büchse 37 zum Durchmesser des Dornes 4 an seiner Stirnseite, das in einem Bereich von 0,83 bis 0,95 liegt, ist einerseits durch die Verwendung einer minimalen Menge inhibitorhaltiger Flüssigkeit im Hohlraum des Schlauches 7, die benötigt wird, um eine thermische Zersetzung der Flüssigkeit zu verhindern, den Betriebszustand zu stabilisieren sowie beim Durchbruch des Schlauches die Flüssigkeit möglichst schnell zu entfernen, und andererseits durch Bedienungskomfort am Anfang des Extrudierens begrenzt, d.h. daß der zu extrudierende Thermoplast bei der Bildung des Schlauches 7 nicht an der Oberfläche der Büchse 37 anhaftet.

Mit dem in Fig. 5 gezeigten Flügelrad 51 im Spritzkopf 1 wird die Vorrichtung wie folgt betrieben. Aus dem Extruder 12 fließt die Thermoplastschmelze in den Formkanal 10 und in den Formschlitz 11 des Spritzkopfes 1. Die Druckluft tritt in die Druckluftkanäle 5 und 6 ein und bläst den im zähflüssigen Zustand aus dem Formschlitz 11 austretenden Thermoplast auf. Aus der Zuführeinrichtung 13, die wie oben beschrieben arbeitet, wird dem Flüssigkeitskanal 8 gleichzeitig die inhibitorhaltige Flüssigkeit zugeführt, die in den zu extrudierenden polymeren Schlauch 7 gelangt. Wird der Hohlraum des Schlauches 7 mit der Flüssigkeit gefüllt, wird der Antrieb 49 eingeschaltet, der die Welle 48 und das Flügelrad 51 über die Mitnehmer 52 in Drehbewegung setzt. Die inhibitorhaltige Flüssigkeit wird vom Flügelrad 51 in Drehung versetzt. Die Flüssigkeit nimmt bei einer vorgegebenen Drehgeschwindigkeit eine Trichterform an und zerfließt über der Oberfläche des zu extrudierenden Schlauches 7.

Dies ermöglicht es, bei einer geringen Inhibitormenge erstens einen optimalen Stand der in Berührung mit dem polymeren Schlauch stehenden inhibitorhaltigen Flüssigkeit und zweitens eine optimale Druckwirkung der Flüssigkeit auf den Schlauch zu erzeugen, wodurch Folien gebildet werden, deren porige Folienstruktur eine maximale Menge an Korrosionsinhibitor enthält.

Durch die intensive Drehung der inhibitorhaltigen Flüssigkeit wird der an der Thermoplast-Flüssigkeits-Grenze entstehende Dampfmantel zerstört, der ein wirksames Eindringen inhibitorhaltiger Flüssigkeit in die Foliendicke verhindert.

Nach Beendigung der Arbeit oder bei der Störung des Betriebszustandes wird die Zufuhr der Druckluft und der inhibitorhaltigen Flüssigkeit in den Hohlraum des Schlauches 7 gestoppt, das Flügelrad 51 zum Stehen gebracht und die über dem Dorn 4 befindliche inhibitorhaltige Flüssigkeit in den Vakuumbehälter 16 abgepumpt.

Durch die Dreheinrichtung 50 im Spritzkopf 1 der Vorrichtung, die die durch den Flüssigkeitskanal 8 zugeführte und über dem Dorn 4 im Hohlraum des polymeren Schlauches 7 befindliche inhibitorhaltige Flüssigkeit in Drehung versetzt, kann ein Flüssigkeitswirbel erzeugt werden, der über der Innenfläche des zu extrudierenden Schlauches entsteht. Dies gestattet es

- bei der Verwendung einer geringen Menge inhibitorhaltiger Flüssigkeit und durch Änderung der Drehgeschwindigkeit einen optimalen Pegel im polymeren Schlauch zu halten, wodurch die Effektivität der Foliensättigung mit dem Korrosionsinhibitor gesteigert wird,
- die dynamische Wechselwirkung der inhibitorhaltigen Flüssigkeit mit der Oberfläche des Schlauches 7 durch Auftreten von Fliehkräften in der rotierenden Flüssigkeit zu verstärken, wodurch die Diffusion des Korrosionsinhibitors in die Thermoplastdicke verstärkt wird,
- den an der Thermoplast-Flüssigkeit-Grenze entstehenden Dampfmantel durch inniges Umrühren der Flüssigkeit zu zerstören, wodurch die Eindringtiefe des Korrosionsinhibitors in die Thermoplastdicke ebenfalls vergrößert wird,
- den Flüssigkeitsdruck auf den Thermoplast relativ gleichmäßig über die ganze Kontaktfläche derselben zu verteilen, wodurch die Gefahr eines Durchbruchs des Schlauches verringert wird,
- eine Dauerberührung der großen Oberfläche des Dornes 4 mit der inhibitorhaltigen Flüssigkeit auszuschließen, wodurch ein optimaler Wärmezustand beim Extrudieren und Aufblasen des Schlauches 7 sichergestellt wird.

Der in Fig. 6 gezeigte Spritzkopf wird wie folgt betrieben: Aus dem Extruder 12 wird die Thermoplastschmelze durch das Endstück 53 dem Kanal 54 des Spritzkopfes 1 zugeführt. Aus dem Kanal 54 gelangt sie in den Formkanal 10 und den Formschlitz 11. Durch die Druckluftkanäle 5 und 6 wird Druckluft zugeführt. Gleichzeitig wird inhibitorhaltige Flüssigkeit in den T-förmigen Flüssigkeitskanal 55 eingepumpt, gelangt durch seine Flansche 56 unter einem zwischen 25 und 45 MPa liegenden Druck in die Kammer 60 des Dornes 4 und durch das durchlässige Wandmaterial der konischen Büchse 58 im Bereich des Formschlitzes 11 auf die Thermoplastschmelze. Bei der Bewegung der Thermoplastschmelze durch den ein Stufenprofil aufweisenden Formschlitz 11 wird durch die Druckwirkung der inhibitorhaltigen Flüssigkeit auf die Thermoplastschmelze ein hydrodynamischer Keil erzeugt.

Der Druck der inhibitorhaltigen Flüssigkeit im Keil nimmt mit kleinerem Spalt zu und der Druck der Flüssigkeit auf die Schmelze nimmt von dem Dorn 4 zur Wand des Mundstücks 3 hin ab. Mit fortschreitender Bewegung im Formschlitz 11 wird der Teil der inhibitorhaltigen Flüssigkeit als Film auf die Innenfläche des Schlauches 7 ausgetragen, der beim Aufblasen des Thermoplastes durch aus dem Druckluftkanal 5 zugeführte Druckluft entsteht. Dadurch verlängert sich die Zeit, in der die inhibitorhaltige Flüssigkeit mit dem Thermoplast wegen des Vorhandenseins des Inhibitorfilms bis zur Kristallisationslinie in Berührung steht, so daß eine porige Struktur in der maximal mit Inhibitor gefüllten Folie erreicht wird.

Somit werden die Kennwerte der Korrosionsschutz- und physikalisch-mechanischen Eigenschaften der Folie erhöht.

Die polymere Korrosionsschutzfolie besitzt erfindungsgemäß ausreichend hohe Festigkeits- und Korrosionsschutzeigenschaften und macht es möglich, die Abtrennung von Korrosionsinhibitoren aufgrund einer Inhomogenität der Struktur allein in dem Verpackungsraum zu regeln, wodurch die Verunreinigung der Umwelt mit schädlichen Stoffen herabgesetzt und somit die Arbeitsbedingungen für Personen, die mit solchen Materialien arbeiten, verbessert und Inhibitorverluste vermindert werden.

Die erfindungsgemäße Folie gewährleistet den Dauerschutz von Eisen- und NE-Metallen gegen atmosphärische Korrosion und entspricht den Anforderungen, die an Konservierungs- und Verpackungsmaterialien gestellt werden. Zugleich gestattet die Folie, welche eine genügende Durchsichtigkeit aufweist, die Unversehrtheit von in sie verpackten Metallgegenständen ohne Umkonservierung und Verpackung zu überwachen sowie den zu verpackenden Materialien durch die Reliefförmigkeit der Folienfläche aufgrund der porigen Struktur ein dekoratives Aussehen zu verleihen. Die erfindungsgemäße polymere Korrosionsschutzfolie ist einfach herzustellen und läßt sich auf Vorrichtungen mit einem Spritzkopf, der nur einen Schlitz aufweist, erzeugen. Die erfindungsgemäßen Verfahren und Vorrichtungen ermöglichen die Herstellung der erfindungsgemäßen Folie ohne zusätzlichen Material- und Energieaufwand.

## Ansprüche

1. Polymere, eine thermoplastische Grundlage von inhomogener Struktur und eine inhibitorhaltige Flüssigkeit enthaltende Korrosionsschutzfolie, dadurch **gekennzeichnet,** daß die thermoplastische Grundlage mit allmählichem Übergang von der porenfreien zur porigen Struktur, gebildet durch ein System von geschlossenen und kommunizierenden Poren, die mit einer inhibitorhaltigen Flüssigkeit gefüllt sind, wobei als solche ein Korrosionsinhibitor in Form einer flüssigen Phase oder seiner Lösung im Weichmacher dient, mit Erhöhung der scheinbaren Dichte bis zu einer der Thermoplastdichte gleichen Größe auf 1/4 bis 2/3 Foliendicke in Richtung von einer der Folienflächen weg ausgeführt ist.

2. Verfahren zur Herstellung einer polymeren Korrosionsschutz-Schlauchfolie nach Anspruch 1, welches ein Extrudieren einer Thermoplastschmelze und anschließendes Aufblasen derselben zu Schläuchen unter Abkühlung vorsieht, dadurch **gekennzeichnet,** daß man den Hohlraum des Folienschlauches mit einer inhibitorhaltigen Flüssigkeit füllt und die Berührung der sich bewegenden Schlauchfolie mit dieser Flüssigkeit unter Konstanthalten des unter der Kristallisationslinie liegenden Flüssigkeitsstandes erfolgt, wobei die Differenz zwischen den Parametern der Löslichkeit der inhibitorhaltigen Flüssigkeit und des Thermoplastes unter 6 liegt.

3. Verfahren nach Anspruch 2, dadurch **gekennzeichnet,**daß der erwähnten Flüssigkeit bei der Berührung mit der sich bewegenden Folie eine Drehbewegung vermittelt wird, wobei das Verhältnis der Winkelgeschwindigkeit zur Bewegungsgeschwindigkeit der Schlauchfolie in einem Bereich von 30 bis 60 $m^{-1}$ gewählt wird.

4. Verfahren zur Herstellung der polymeren Korrosionsschutz-Schlauchfolie nach Anspruch 1, das ein Extrudieren der Thermoplastschmelze durch den Formschlitz eines ringförmigen Spritzkopfes und anschließendes Aufblasen derselben zu Schläuchen unter Abkühlung vorsieht, dadurch **gekennzeichnet,** daß man in der Zone am Formschlitzaustritt auf die Thermoplastschmelze die inhibitorhaltige unter einem Druck von 25 bis 45 MPa zugeführte Flüssigkeit in Richtung nach der Zone der Bildung der porigen Struktur der mit der inhibitorhaltigen Flüssigkeit gefüllten thermoplastischen Grundlage von der Seite der Schlauchinnenfläche her einwirken läßt.

5. Vorrichtung zur Durchführung des Verfahrens nach Anspruch 2, mit einer Zuführeinrichtung für die Zufuhr inhibitorhaltiger Flüssigkeit und mit einem Spritzkopf, der ein hohles Gehäuse mit einem Mundstück und einen in dem Gehäuse vorgesehenen und durch das Mundstück hindurchgehenden Dorn umfasst, in dem wenigstens ein Druckluftkanal für die Druckluftzufuhr und wenigstens ein Flüssigkeitskanal für die Zufuhr der inhibitorhaltigen Flüssigkeit in einen entstehenden Schlauch ausgeführt sind, wobei die Gehäuse- und die Mundstückwand mit der Wand des Dorns einen Formkanal bilden, der in einen ringförmigen Formschlitz übergeht, dadurch **gekennzeichnet,** daß die Zufuhreinrich tung (13) einen Behälter (23) aufweist, der in gleicher Höhe wie eine Austrittsöffnung des Flüssigkeitskanals (8, 43, 55) in vertikaler Richtung hin- und herbewegbar angeordnet ist, wobei der Flüssigkeitskanal (8, 43, 55) mit dem Behälter (23) durch eine Rohrleitung (34) verbunden ist und mit ihm miteinander in Verbindung stehende Gefäße bildet.

6. Vorrichtung nach Anspruch 5, dadurch **gekennzeichnet,** daß der Behälter (23) eine Einrichtung (29) zur Regelung des Standes der in dem Behälter (23) befindlichen inhibitorhaltigen Flüssigkeit aufweist.

7. Vorrichtung nach Anspruch 5, dadurch **gekennzeichnet,** daß eine Büchse (37) mit dem Dorn (4) fluchtend in seiner Stirnseite angebracht ist, und die Austrittsöffnung des Flüssigkeitskanals (43) außerhalb der Büchse (37) vorgesehen ist, wobei das Verhältnis des Außendurchmessers der Büchse (37) zum Durchmesser des Dornes (4) an der Stirnseite in einem Bereich von 0,83 bis 0,95 liegt.

8. Vorrichtung nach Anspruch 5 und 6, **gekennzeichnet** durch eine Dreheinrichtung (50), die die durch den Flüssigkeitskanal (8) zugeführte inhibitorhaltige Flüssigkeit im entstehenden Schlauch (7) in Drehung versetzt.

9. Vorrichtung nach Anspruch 8, dadurch **gekennzeichnet,** daß die Dreheinrichtung (50) als in der Nähe der Stirnseite des Dorns (4) angebrachtes Flügelrad ausgebildet ist, das mit einem Antrieb (49) für ihre Drehung verbunden ist.

10. Spritzkopf zur Durchführung des Verfahrens nach Anspruch 4 mit einem hohlen Gehäuse, an dem ein Mundstück angebracht ist, und mit einem in dem Gehäuse vorgesehenen und durch das Mundstück hindurchgehenden Dorn, in dem wenigstens ein Druckluftkanal für die Druckluftzufuhr in einen entstehenden

Schlauch und wenigsens ein Flüssigkeitskanal für die Zufuhr inhibitorhaltiger Flüssigkeit ausgebildet sind, wobei die Gehäuse- und die Mundstückwand mit der Dornwand einen Formkanal bilden, der in einen ringförmigen Formschlitz übergeht, der Dorn im Bereich des Formschlitzes eine zum Formschlitz hin offene Nut aufweist, in der eine Büchse sitzt, die aus einem für die inhibitorhaltige Flüssigkeit durchlässigen Material besteht, und die Innenwand der Büchse und die Ringnutwände eine Kammer bilden, dadurch **gekennzeichnet,** daß die Kammer (60) mit dem Flüssigkeitskanal verbunden ist, und die Außenfläche der Büchse (58) konisch ausgeführt ist, wobei die größere Grundfläche (59) der Büchse (58) der Austrittsöffnung des Formschlitzes (11) zugewandt ist, während die Ringnutwand an der kleineren Grundfläche (61) der Büchse (58) gegenüber der Außenfläche der Büchse (58) einen ringförmigen Vorsprung (62) bildet.

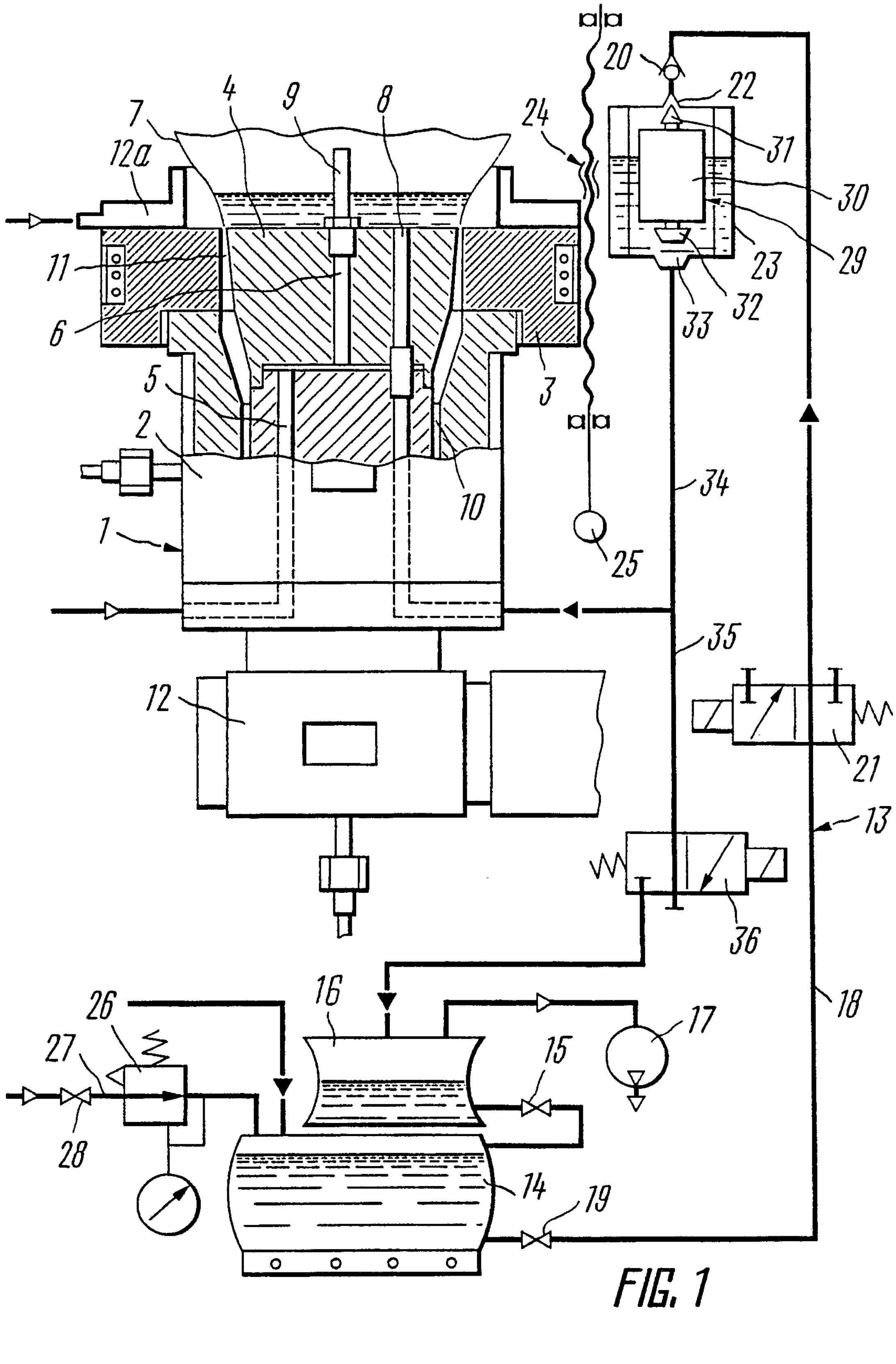

1
2
3
4
5
6
7
8
9
10
11
12
12a
13
14
15
16
17
18
19
20
21
22
23
24
25
26
27
28
29
30
31
32
33
34
35
36


FIG. 1

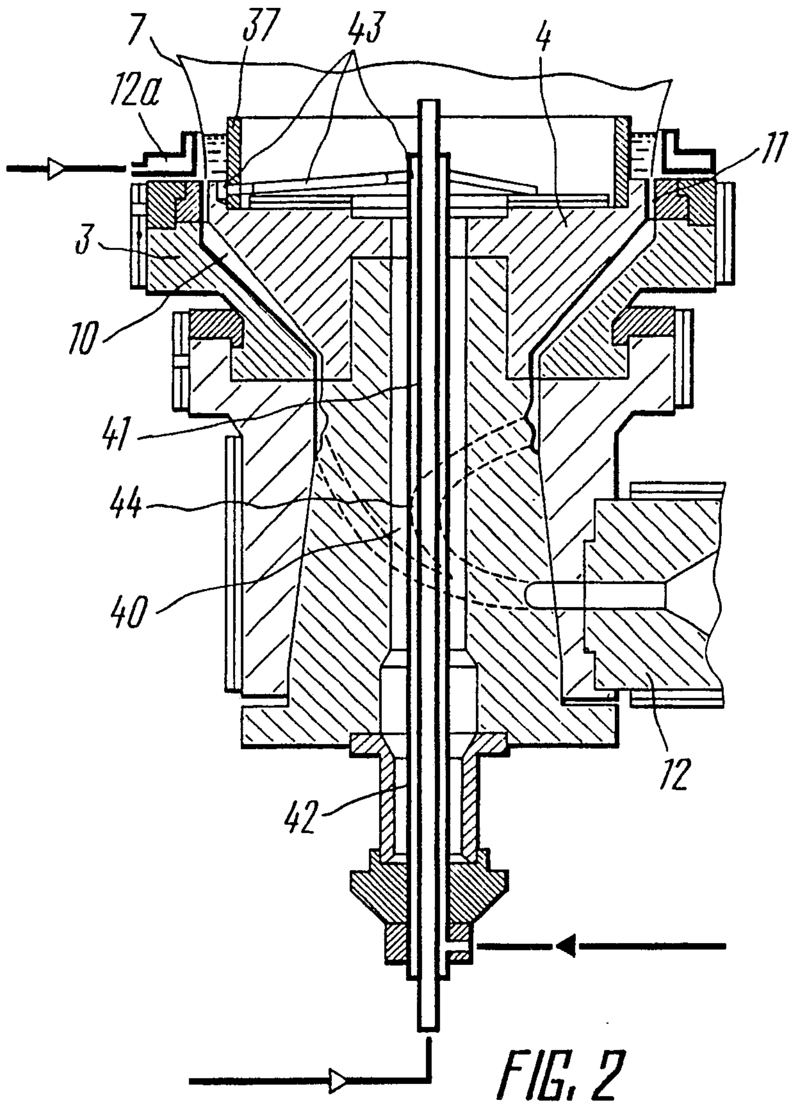


FIG. 2

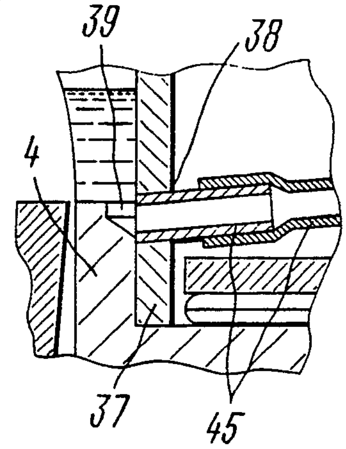


FIG. 3

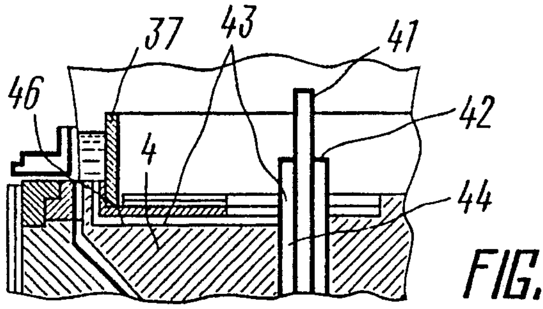


FIG. 4

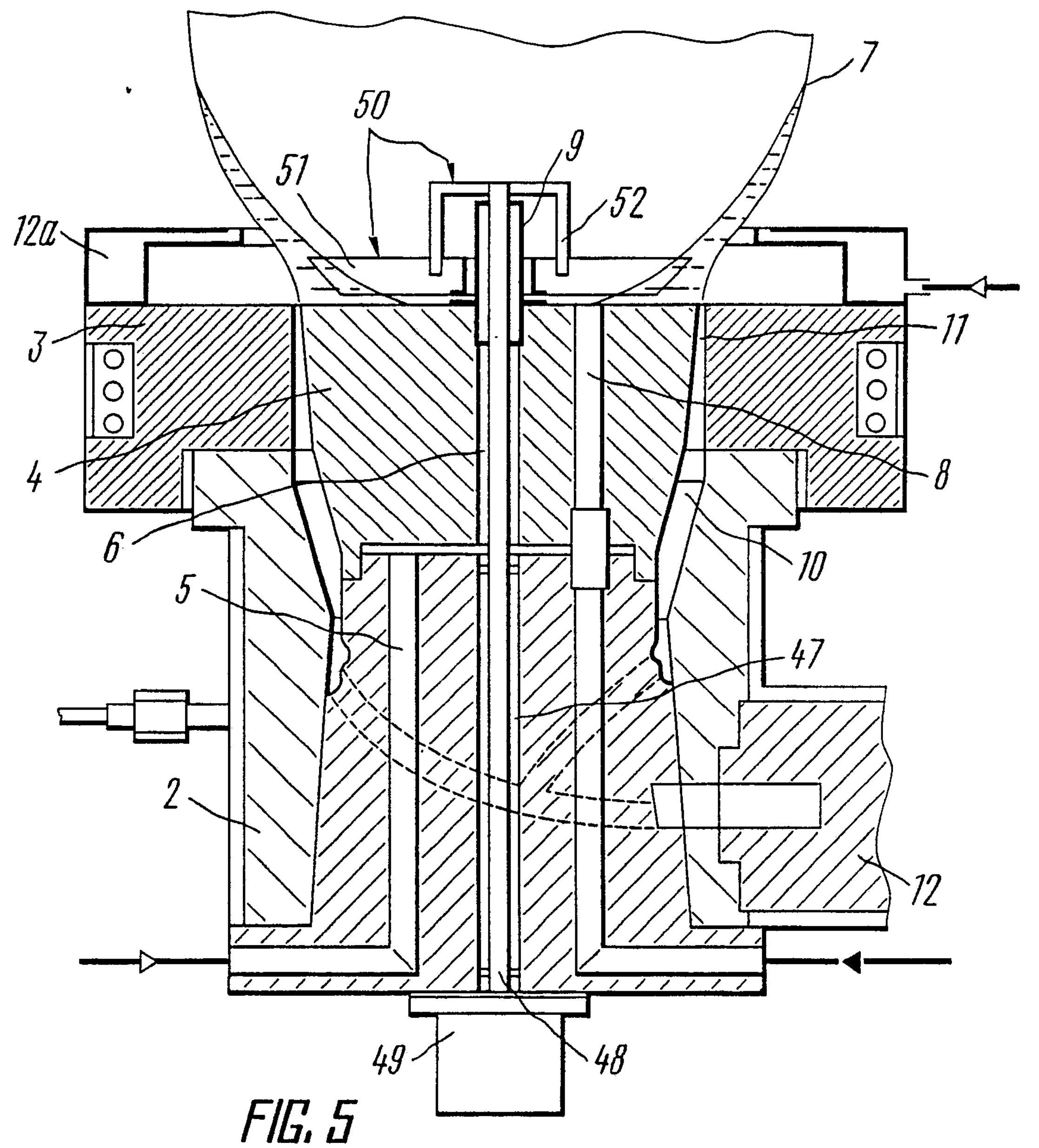


FIG. 5

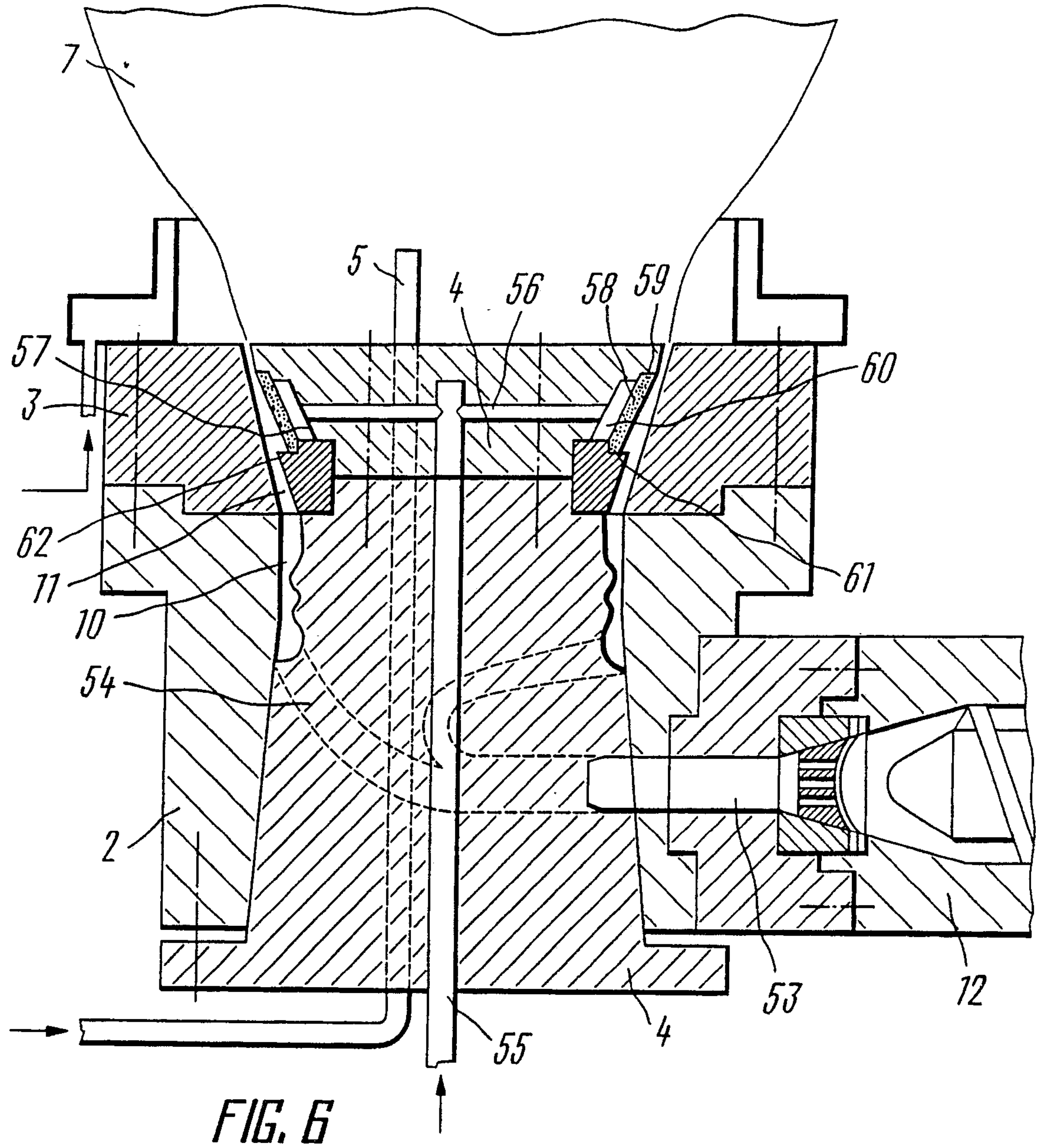


FIG. 6

Europäisches Patentamt

# EUROPÄISCHER RECHERCHENBERICHT

Nummer der Anmeldung

EP 88 12 1153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 12, Nr. 272 (M-724)[3119], 28. Juli 1988; & JP-A-63 54 233 (FUAINTETSUKU KENKYUSHO K.K.) 08-03-1988<br>* Zusammenfassung * | 5-10 | C 23 F 11/02<br>B 65 D 81/26<br>B 29 C 47/00<br>B 05 D 7/02 |
| A | Idem | 1,2 | |
| X | US-A-4 248 576 (BIRKS et al.)<br>* Spalte 3, Zeile 2 - Spalte 4, Zeile 49; Figur * | 5-10 | |
| X | FR-A-1 300 783 (UNION CARBIDE)<br>* Seite 4, rechte Spalte, Zeile 53 - Seite 5, linke Spalte, Zeile 13; Figur 3 * | 5-10 | |
| A | GB-A-2 188 274 (INSTITUT MEKHANIKI METALLOPOLIMERNYKH)<br>* Seite 2, Zeilen 6-28 * | 1-4 | RECHERCHIERTE SACHGEBIETE (Int. Cl.5) |
| A | GB-A-2 187 466 (INSTITUT MEKHANIKI METALLOPOLIMERNYKH)<br>* Seite 2, Zeilen 3-43 * | 1-4 | B 29 C<br>B 05 D<br>C 23 F<br>B 65 D |
| A | PATENT ABSTRACTS OF JAPAN, Band 8, Nr. 258 (M-340)[1695], 27. November 1984; & JP-A-59 131 427 (UBE KOSAN K.K.) 28-07-1984 | 3,8,9 | |
| A | US-A-4 485 062 (DAWES et al.)<br>* Spalte 2, Zeile 49 - Spalte 3, Zeile 19 * | 10 | |

Der vorliegende Recherchenbericht wurde für alle Patentansprüche erstellt

| Recherchenort | Abschlußdatum der Recherche | Prüfer |
|---|---|---|
| DEN HAAG | 08-08-1989 | ATTALLA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument